# EUROPEAN PATENT SPECIFICATION

(11) **EP 4 231 672 B1**
(45) Date of publication and mention of the grant of the patent: **25.03.2026**
(21) Application number: 21925466.1
(22) Date of filing: 25.11.2021
(51) Int. Cl.: H04W 4/06

(54) **METHOD FOR REALIZING HANDOVER OF MULTICAST AND BROADCAST SERVICE, AND RELATED DEVICE**
VERFAHREN ZUR DURCHFÜHRUNG DER ÜBERGABE EINES MULTICAST- UND RUNDFUNKDIENSTES UND ZUGEHÖRIGE VORRICHTUNG
PROCÉDÉ DE RÉALISATION DE TRANSFERT DE SERVICE DE MULTIDIFFUSION ET DE DIFFUSION, ET DISPOSITIF ASSOCIÉ

(30) Priority: 10.02.2021 CN 202110184922
(43) Date of publication of application: 23.08.2023
(73) Proprietor: Tencent Technology (Shenzhen) Company Limited, Shenzhen, Guangdong, 518057 (CN)
(72) Inventor: XIONG, Chunshan, Shenzhen, Guangdong 518057 (CN)
(74) Representative: Novagraaf International SA
(86) International application number: PCT/CN2021/133029
(87) International publication number: WO 2022/170819

(56) References cited:
- CN-A- 109 246 780
- CN-A- 110 098 942
- CN-A- 110 167 190
- CN-A- 111 373 792
- CN-A- 111 526 553
- CN-A- 111 866 975
- CN-A- 112 954 616
- CN-A- 112 954 617
- CN-A- 112 954 617
- US-A1- 2018 248 708
- "3rd Generation Partnership Project; Technical Specification Group Services and System Aspects; Study on architectural enhancements for 5G multicast-broadcast services (Release 17)", 30 November 2020 (2020-11-30), XP051963796, Retrieved from the Internet <URL:https://ftp.3gpp.org/tsg_sa/TSG_SA/TSGs_90E_Electronic/Docs/SP-200964.zip 23757-120.zip 23757-120.docx> [retrieved on 20201130]
- ZTE: "KI#1, discussion and interim conclusion on the several aspect of key issue #1", vol. SA WG2, no. Electronic, Elbonia; 20201012 - 20201023, 2 October 2020 (2020-10-02), XP052464626, Retrieved from the Internet <URL:https://ftp.3gpp.org/tsg_sa/WG2_Arch/TSGS2_141e_Electronic/Docs/S2-2007515.zip S2-2007515 KI#1, discussion and interim conclusion on the several aspect of key issue #1.docx> [retrieved on 20201002]

## Description

This application claims priority to Chinese Patent Application No. 202110184922.2, filed with the China National Intellectual Property Administration on February 10, 2021 and entitled "METHOD FOR REALIZING HANDOVER OF MULTICAST AND BROADCAST SERVICE, AND RELATED DEVICE".

### FIELD OF THE TECHNOLOGY

The disclosure relates to the field of communication technologies, and specifically, to multi-cast broadcast service handover.

### BACKGROUND OF THE DISCLOSURE

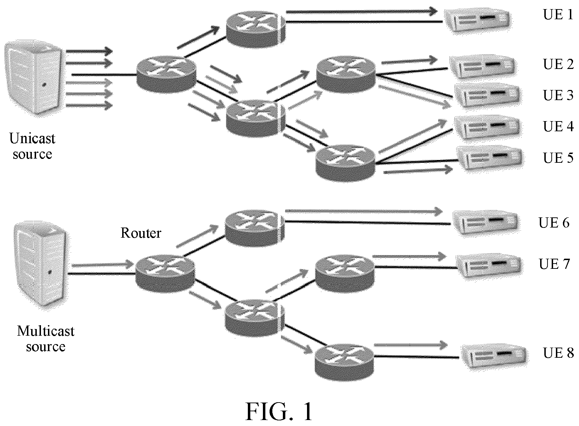

Unicast is one-to-one communication, and a unicast source transmits multiple pieces of different content to different user equipments (UEs) through routers, for example, in FIG. 1, it is assumed that the unicast source respectively transmits five pieces of different content to UE 1, UE 2, UE 3, UE 4, and UE 5. The unicast communication is advantageous in that pieces of different content may be transmitted to different users.

"Multicast" is to transmit same content to multiple authorized user equipments, for example, in FIG. 1, a multicast source simultaneously transmits same content to authorized UE 6, UE 7, and UE 8. Application scenarios such as an online video conference and online video on demand are particularly suitable for multicast. Using the multicast mode not only can realize the transmission of data of all target nodes at a time, but also can achieve the purpose of transmitting data to only a specific object (the authorized UEs).

Broadcast is also to transmit same content to multiple user equipments. However, selection of the user equipments is not performed in broadcast.

There is a problem in a 5G (5th generation mobile networks or 5th generation wireless systems, 5th-Generation) multi-cast broadcast service (MBS), that is, in a 5G network, only some base stations may support an MBS, and some other base stations may not support the MBS (for example, an MBS multicast service and/or an MBS broadcast service). When a UE moves from a 5G base station (which is referred to as a source base station or a source radio access network (RAN) below)) or a cell that supports the MBS to a 5G base station (which is referred to as a target base station or a target RAN below) or a cell that does not support the MBS, if the UE has joined the MBS in advance, the UE needs to be handed over to a unicast transmission mode, and continuously transmit data corresponding to the MBS in the unicast transmission mode after activating MBS transmission, to achieve MBS continuity.

A solution provided by the related art requires the UE to associate an MBS session (an abbreviation of a multicast session or a broadcast session, that is, a multicast or broadcast session, which may be referred to as a multi-cast broadcast service session (which is referred to as MBS session for short below) and may include, for example, an MBS multicast session and/or an MBS broadcast session) with a protocol data unit (PDU) session (which is referred to as PDU session for short below), hand over the PDU session to a target cell or a target RAN, and then transmit service data corresponding to the MBS session by using the PDU session.

Since the UE does not learn in advance when to hand over (for example, handover is triggered by the 5G network), to support handover that may be performed at any time, when an MBS session is activated, a PDU session needs to be established immediately, and the MBS session needs to be associated with the PDU session before the UE is handed over to the target RAN. This causes a waste of resources, because the UE may be handed over to a target base station that supports the MBS, or may be handed over to a target base station that does not support the MBS after a long time such as 2 hours. 3GPP SP-200964; Technical Specification Group Services and System Aspects; Study on architectural enhancements for 5G multicast-broadcast services (Release 17) discloses a method for MBS service continuity wherein, in case a target eNB does not support MBS, a PDU session established in the source eNB is also transferred to the target eNB and the MBS is delivered to the UE via the unicast PDU session.

### SUMMARY

The present invention is defined by the appended claims. The following aspects and implementation clauses in this section are provided for a better understanding of the invention which is solely defined by the appended claims. Embodiments of the present disclosure provide a method for implementing multi-cast broadcast service handover, a user equipment, a session management function, a multicast broadcast unified data management function, and a computer-readable storage medium, which can reduce waste of resources of a protocol data unit (PDU) session associated with a multicast broadcast service (MBS) session in a process in which the user equipment is handed over from a source base station supporting an MBS to a target base station not supporting the MBS.

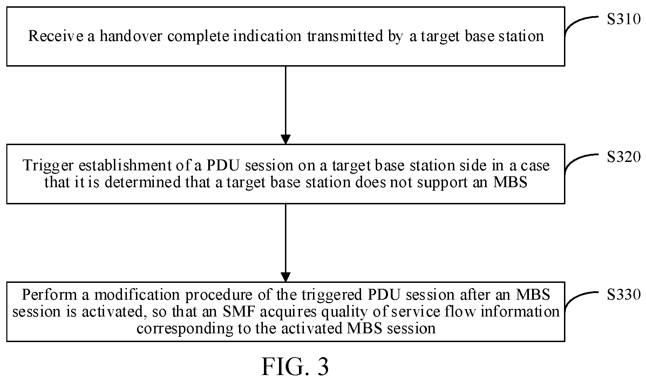

In the technical solutions provided by the embodiments of the present disclosure, on one hand, an MBS session established on a source base station side is not activated in a case that a UE is handed over from a source base station supporting an MBS to a target base station not supporting the MBS, after the UE is handed over from the source base station supporting the MBS to the target base station not supporting the MBS, a PDU session is triggered to be established on a target base station side, and after the MBS session is activated, a quality of service flow (QoS flow, which may be all QoS flows corresponding to the activated MBS session, and there may be one or more QoS flows) corresponding to the activated MBS session is established on the PDU session in a modification procedure of the PDU session, so that the MBS session does not need to be associated with the PDU session when being activated, thereby saving resources of the PDU session, and maintaining service continuity of the MBS. On the other hand, in such a manner, under the premise of slightly modifying a 5G system, the MBS session may be handed over to a unicast PDU session in a case that the UE is handed over between the source base station supporting the MBS and the target base station not supporting the MBS. In the following, the invention is best understood in view of Figures 3, 9 and 10. The remaining embodiments, aspects, or examples are included in order to help the reader better understand the invention.

### BRIEF DESCRIPTION OF THE DRAWINGS

FIG. 1 is a schematic diagram of comparison between unicast IP transmission and multicast IP transmission in the related art.
FIG. 2 is a diagram of a reference architecture of a 5G MBS in the related art.
FIG. 3 schematically shows a flowchart of a method for implementing multi-cast broadcast service handover according to an embodiment of the present disclosure.
FIG. 4 schematically shows a schematic diagram of Xn based inter NG-RAN handover without UPF re-allocation according to an embodiment of the present disclosure.
FIG. 5 schematically shows a schematic diagram of a process of triggering establishment of a PDU session on a target NG-RAN side according to an embodiment of the present disclosure.
FIG. 6 schematically shows a schematic diagram of a process of triggering modification of a PDU session on a target NG-RAN side according to an embodiment of the present disclosure.
FIG. 7 schematically shows a schematic diagram an execution phase of inter NG-RAN node N2 based handover according to an embodiment of the present disclosure.
FIG. 8 schematically shows a schematic diagram of storage of MBS session context information according to an embodiment of the present disclosure.
FIG. 9 schematically shows a flowchart of a method for implementing multi-cast broadcast service handover according to another embodiment of the present disclosure.
FIG. 10 schematically shows a flowchart of a method for implementing multi-cast broadcast service handover according to still another embodiment of the present disclosure.
FIG. 11 schematically shows a block diagram of a user equipment according to an embodiment of the present disclosure.
FIG. 12 schematically shows a block diagram of a session management function according to an embodiment of the present disclosure.
FIG. 13 schematically shows a block diagram of a multicast broadcast unified data management function according to an embodiment of the present disclosure.

### DESCRIPTION OF EMBODIMENTS

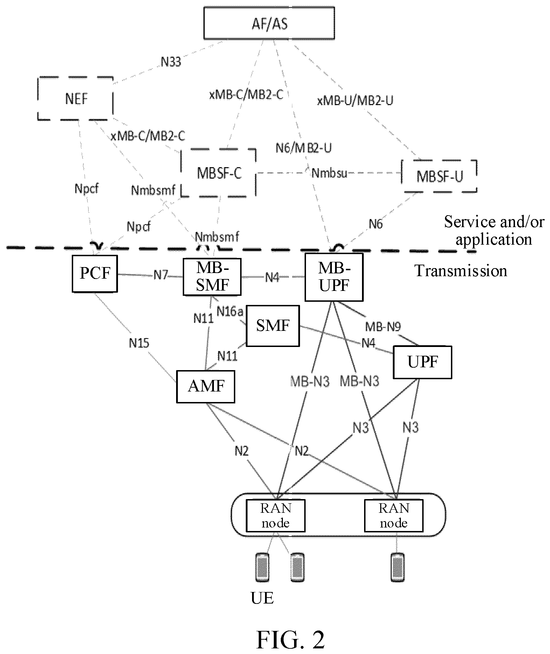

An architecture of a 5G MBS is shown in FIG. 2. As shown in FIG. 2, a user plane function (UPF) interacts with a session management function (SMG) through an N4 interface, receives multicast broadcast service (MBS) data from a multicast broadcast-UPF (MB-UPF) through an MB-N9 interface, and may further transmit the MBS data to an NG-RAN (which is a 5G radio access network, a RAN node in FIG. 2) through an N3 interface. The UPF and the MB-UPF are independent in logic but may also jointly use a same UPF entity. A session management function (SMF) may select a multicast broadcast SMF (MB-SMF) for an MBS session and may interact with the MB-SMF to obtain information related to the MBS session. The SMF and the MB-SMF are independent in logic but may also jointly use a same entity. A unified data repository (UDR) or a network repository function (NRF) supports discovery of the MB-SMF for the MBS session and stores ID of the selected MB-SMF, that is, MB-SMF ID.

A multicast broadcast service function (MBSF) may include an MBSF user plane function (MBSF-U) and an MBSF control plane function (MBSF-C). The MBSF-C/U are not necessary but are necessary under the following two conditions: when the 5G MBS and a multimedia broadcast/multicast service (MBMS) of 4G or 3G are interconnected, that is, an application function (AF) of 5G and an MBMS application service (AS) of 4G or 3G are a same entity, referring to FIG. 2, or when an operator needs to perform media processing on an MBS (for example, perform processing such as transcoding or content detection on a video).

The SMF and the UPF may participate in a process of a 5G MBS session, and a related description is made in the following embodiments.

An English full name of NEF in FIG. 2 is network exposure function. An English full name of PCF is policy control function, and Npcf refers to obtaining an Npcf message of a service provided by the PCF. An English full name of AMF is access and mobility management function.

FIG. 3 schematically shows a flowchart of a method for implementing multi-cast broadcast service handover according to another embodiment of the present disclosure. A description is made by using an example in which any user equipment (UE) performs the method shown in the embodiment of FIG. 3. A base station that the UE accesses before handover is referred to as a source base station, and a base station that the UE accesses after handover is referred to as a target base station. In the following exemplary descriptions, both the source base station and the target base station are NG-RANs in a 5G system, which are respectively referred to as a source NG-RAN (or S-NG-RAN) and a target NG-RAN (or T-NG-RAN).

In this embodiment of the present disclosure, assuming that the source base station that the UE accesses before handover supports an MBS, the UE has established an MBS session at the source base station before being handed over to a target base station, but the MBS session has not been activated.

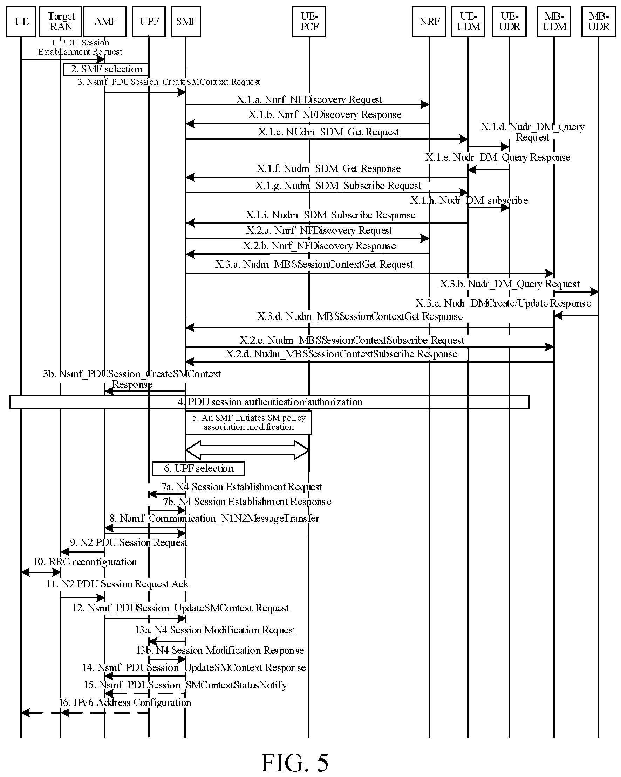

It may be understood that, in a case that the UE has established an MBS session at a source base station before handover and the MBS session has been activated, a quality of service flow (which may be all QoS flows corresponding to the activated MBS session, and there may be one or more QoS flows) corresponding to the activated MBS session may be established in a PDU session in a synchronized manner, that is, a PDU session establishment procedure shown in an embodiment of FIG. 5 below. In other words, quality of service flow information (which may be all pieces of quality of service flow information corresponding to the activated MBS session, and there may be one or more pieces of quality of service flow information) corresponding to the activated MBS session may be synchronously transmitted to an SMF, so that the SMF may establish the quality of service flow corresponding to the activated MBS session on the PDU session in the PDU session establishment procedure.

The solution provided in this embodiment of the present disclosure is applied to an MBS multicast session or is applied to an MBS broadcast session. In the following exemplary descriptions, if the MBS multicast session is used as an example for description, it may be extended to the MBS broadcast session, to adaptively modify a corresponding parameter and message.

In this embodiment of the present disclosure, an action that the UE clearly needs to join an MBS but has not started service data transmission is defined as "register", "join", or "establish". An action that after joining the MBS, the UE starts transmission of MBS data is defined as "activate" or "service startup", that is, only after a QoS flow is established, an MBS session is "activated". No QoS flow is established, and an MBS session without an MB-UPF is just established.

As shown in FIG. 3, the claimed method includes the following steps.

S310: Receive a handover complete indication transmitted by a target base station, the handover complete indication being used for indicating that the user equipment has been handed over from the source base station to the target base station.

In this embodiment of the present disclosure, the handover complete indication may be in any form. For example, the target base station transmits an indication of a related physical layer such as a Media Access Control (MAC) layer or a radio link control (RLC) layer or a message of a radio resource control (RRC) layer to the UE. The form of the handover complete indication is not limited in the present disclosure provided that it can be informed that the UE has successfully accessed to the target base station.

S320: Trigger establishment of a protocol data unit (PDU) session on a target base station side in a case that it is determined that the target base station does not support the MBS, so that a session management function (SMF) subscribes to a multicast broadcast unified data manager (MB-UDM), single network slice selection assistance information (S-NSSAI) of the PDU session being the same as S-NSSAI of the MBS session, and a data network name (DNN) of the PDU session being the same as a DNN of the MBS session.

In an exemplary embodiment, the determining that the target base station does not support the MBS may include: receiving a system information block broadcast by the target base station, and determining, according to the system information block, that the target base station does not support the MBS; or obtaining a target service area of the MBS, and determine, according to the target service area, that the target base station does not support the MBS.

Specifically, after the UE is handed over from the source base station that supports the MBS to the target base station that does not support the MBS, the UE may learn, by using a system information block (SIB) broadcasted by a target cell system corresponding to the target base station, that a target cell does not support an MBS multicast/broadcast session. Alternatively, the UE may determine, in another manner such as according to a target service area of an MBS multicast/broadcast session, whether the target base station supports the MBS multicast/broadcast session. A manner in which the UE determines whether the target base station supports the MBS is not limited in the present disclosure.

In an exemplary embodiment, the triggering establishment of a PDU session on a target base station side may include: transmitting a non-access stratum (NAS) message to an access and mobility management function (AMF), the NAS message carrying a request type, the request type indicating an existing MBS session, so that the AMF selects, according to a value of the request type, an SMF for newly establishing the PDU session.

In an exemplary embodiment, the non-access stratum message may further carry the S-NSSAI, the DNN, and an MBS session identity (ID) of the MBS session, so that the SMF establishes the PDU session according to the S-NSSAI, the DNN, and the MBS session identity, and subscribes to the MB-UDM.

In an exemplary embodiment, the NAS message further carries a PDU session identity (ID) corresponding to the PDU session and an N1 session management (SM) container, the N1 SM container carrying a PDU session establishment request.

For example, after the UE is handed over to the target base station that does not support the MBS and determines that the target base station does not support the MBS, the UE may initiate a PDU session establishment procedure, to establish the PDU session on the target base station side. The UE may transmit an NAS message to the AMF, the NAS message carrying the following parameters: S-NSSAI, DNN, PDU session ID, request type, MBS session ID (for example, may include an MBS multicast session/broadcast session ID, which may also be record as an old MBS multicast/broadcast session ID for corresponding to an original source base station below), and N1 SM container, and the N1 SM container carrying a PDU session establishment request.

In this embodiment, the request type indicates an existing MBS session. The existing MBS session may include an existing MBS multicast/broadcast session. After receiving the NAS message transmitted by the UE, the AMF processes the request type indicating the existing MBS multicast/broadcast session as a newly established PDU session, that is, selects a new SMF. The AMF may establish the PDU session by interacting with the SMF, and establish one or more QoS flows corresponding to the activated MBS session on the PDU session in a subsequent PDU session modification procedure.

Although in the foregoing examples, a description is made by using an example in which one NAS message carries S-NSSAI, DNN, PDU session ID, request type, MBS session ID, and N1 SM container, the present disclosure is not limited thereto. In another embodiment, the UE may directly or indirectly transmit multiple NAS messages to the AMF, each NAS message carrying at least a part of the foregoing content, or the UE may directly or indirectly transmit one or more messages in another form to the AMF provided that the information can be transmitted to the AMF, to inform the AMF that a PDU session needs to be established currently, and the PDU session is used for replacing the MBS session that has been established and has not been activated on the source base station side. A specific value and expression form of the information are not limited to the foregoing examples.

In this embodiment of the present disclosure, the PDU session established at the target base station side is used for replacing the MBS session such as the MBS multicast/broadcast session at the source base station, and a combination of S-NSSAI and DNN of the PDU session at the target base station is the same as a combination of S-NSSAI and DNN of the original MBS multicast/broadcast session. In this way, continuity of the MBS may be maintained.

In an exemplary embodiment, in a case that the user equipment, before handover, has established and not activated multiple MBS sessions at the source base station, based on S320, a corresponding PDU session is established for each MBS session after the UE is handed over to the target base station, S-NSSAI of each MBS session being the same as S-NSSAI of the corresponding PDU session, and a DNN of each MBS session being the same as a DNN of the corresponding PDU session.

Specifically, in a case that the UE, before handover to the target base station, has simultaneously established and not activated multiple MBS sessions at the source base station, each MBS session corresponds to a combination of S-NSSAI and DNN, and a SIB message broadcasted by the target base station may indicate that the MBS is not supported at all, which S-NSSAI does not support the MBS, which DNN does not support the MBS, or which a combination of S-NSSAI or a DNN does not support the MBS session, the UE may determine, according to indication information of the broadcasted SIB message, that multiple corresponding PDU sessions are established at the target base station.

In an exemplary embodiment, after the receiving a handover complete indication transmitted by a target base station, the method may further include: registering, in a case that the user equipment changes to a new tracking area, the user equipment with a network. The UE may trigger the establishment of the PDU session on the target base station side before the registration procedure or after the registration procedure.

Specifically, when the UE moves to a new TA, and the new TA is beyond current registration areas (which may be formed by one or more TAs) of the UE, a registration procedure with a type of mobility registration update needs to be performed, so that the UE registers with a network such as a 5G system (5GS) again in the new TA.

In an exemplary embodiment, in a case that the user equipment moves from the source base station to the target base station in an idle state (CM-IDLE), before the triggering establishment of a PDU session on a target base station side, the method may further include: triggering a service request procedure, so that the user equipment enters a connected state (CM-CONNECTED).

For example, if the UE moves from a source base station that supports MBS multicast/broadcast session to another target base station that does not support MBS multicast/broadcast session in the CM-IDLE state, the UE may enter the CM-CONNECTED state by using a service request and then perform a PDU session establishment procedure.

In an exemplary embodiment, in a case that the user equipment moves from the source base station to the target base station in an idle state and a current tracking area identity (TAI) of the user equipment is not included in a registered tracking area identity list (TAI list), before the triggering establishment of a protocol data unit (PDU) session on a target base station side, the method further includes: performing a registration procedure with a registration type of mobility registration update, so that the user equipment enters a connected state.

For example, in a case that the UE moves from a source base station that supports an MBS multicast/broadcast session to another target base station that does not support the MBS multicast/broadcast session in a CM-IDLE state and the UE finds that a current TAI is not in a registered TAI list, the UE first performs a registration procedure with a registration type of mobility registration update and then performs the PDU session establishment procedure in a case that a signaling connection is not released.

For a PDU session establishment procedure, reference may be made to the description of an embodiment shown in FIG. 5.

S330: Perform a modification procedure of the triggered PDU session after the MBS session is activated, so that the SMF acquires quality of service flow information corresponding to the activated MBS session, to establish a quality of service flow corresponding to the MBS session in the PDU session.

There are one or more pieces of quality of service flow information.

In this embodiment of the present disclosure, after the UE is handed over to the target base station, the SMF may trigger a modification procedure for the established PDU session in a case that the MBS session established on the source base station side that the UE accesses before handover is activated after handover. When performing the triggered modification procedure of the PDU session, the UE may cause the SMF to obtain QoS Flow information (where the following embodiments are included in a list of QoS Flow information, but the present disclosure is not limited thereto, which may be in another form) corresponding to the activated MBS session, so that the SMF can establish the QoS Flow corresponding to the activated MBS session on the PDU session, thereby achieving continuity of service data transmission.

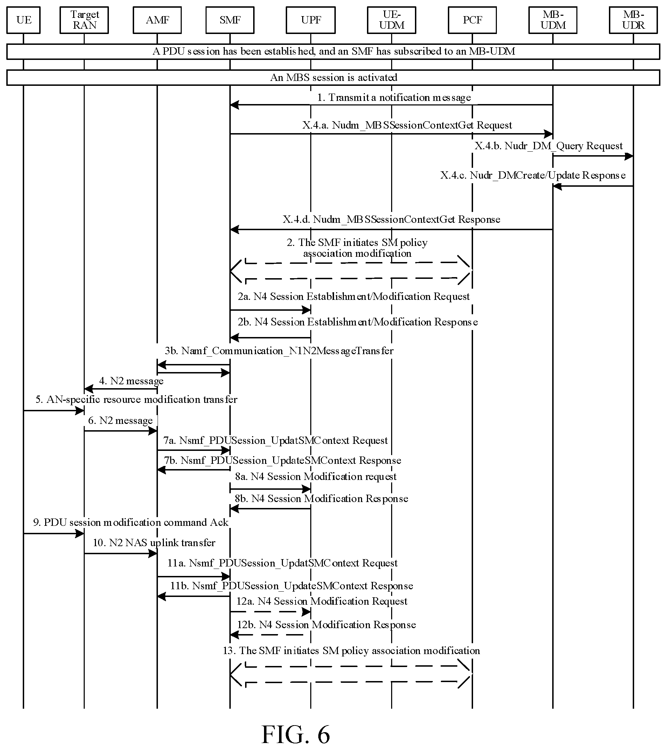

For the PDU session modification procedure, reference may be made to the description of an embodiment of FIG. 6 in the following.

According to the method for implementing multi-cast broadcast service handover provided in an implementation of the present disclosure, on one hand, an MBS session established on a source base station side is not activated in a case that a UE is handed over from a source base station supporting an MBS to a target base station not supporting the MBS, after the UE is handed over from the source base station supporting the MBS to the target base station not supporting the MBS, a PDU session is triggered to be established on a target base station side, and after the MBS session is activated, a quality of service flow corresponding to the activated MBS session is established on the PDU session in a modification procedure of the PDU session, so that the MBS session does not need to be associated with the PDU session when the MBS session is established, thereby saving resources of the PDU session, and maintaining service continuity of the MBS. On the other hand, in such a manner, modification to the 5G system is minimum, and the activated MBS session is handed over to a unicast PDU session when the UE is handed over between the source base station that supports the MBS and the target base station that does not support the MBS. In addition, the solution provided in this embodiment of the present disclosure supports the UE to implement establishment of a unicast PDU session in an asynchronous manner in a case that a transmission plane of the MBS session is not established or the UE is handed over to a target base station not supporting the MBS.

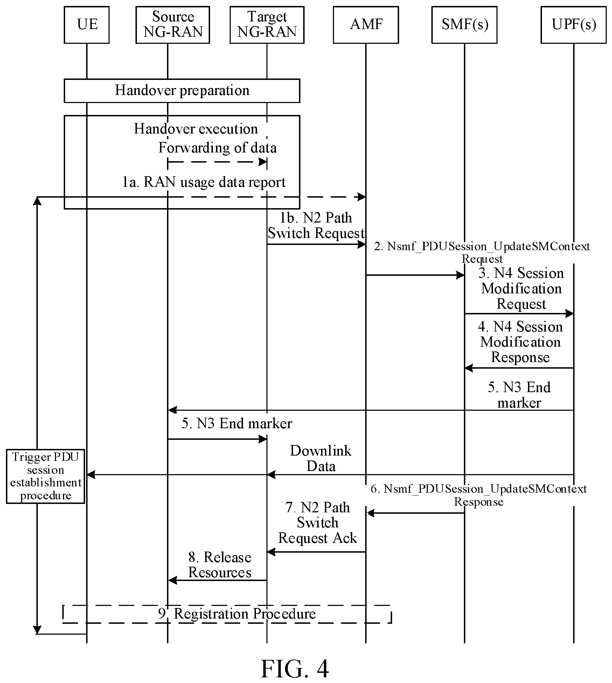

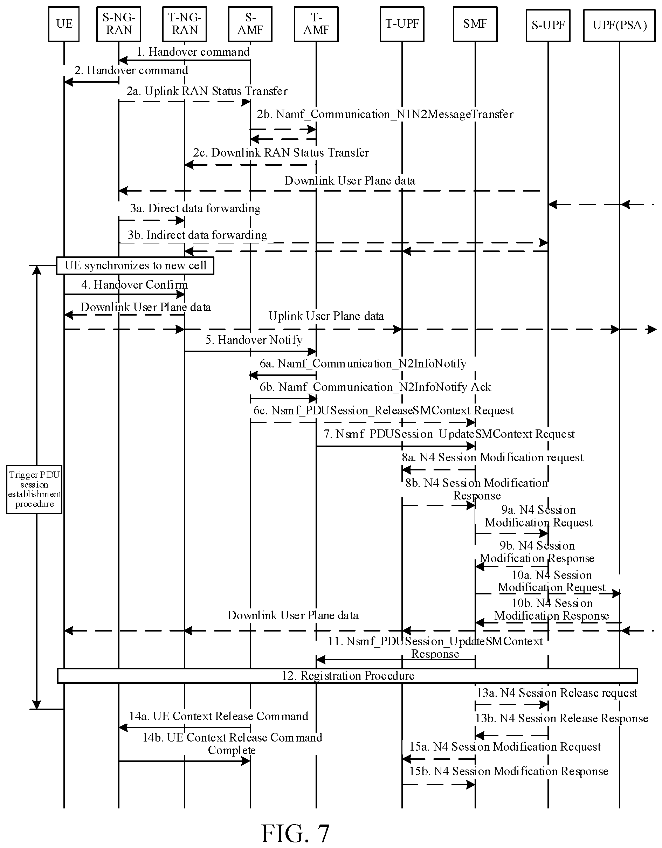

A handover procedure of the UE in 3rd generation partnership project (3GPP) has multiple handover cases. Two cases are listed in FIG. 4 and FIG. 7 in the embodiments of the present disclosure, but the method provided in this embodiment of the present disclosure is not limited to the two cases, for example, the method is further applied to two cases of "Xn based inter NG-RAN handover with insertion of intermediate UPF" and "Xn based inter NG-RAN handover with intermediate UPF re-allocation". The method provided in this embodiment of the present disclosure is to add a PDU session establishment procedure before or after a registration procedure (for example, step 9 in FIG. 4 or step 12 in FIG. 7, or even as shown in FIG. 4, the registration procedure may not exist, that is, the registration procedure is optional).

A 5G radio access network mainly includes two nodes: gNB and ng-eNB, and an interface between gNB and gNB, an interface between gNB and ng-eNB, and an interface between ng-eNB and gNB are all Xn interfaces, the Xn interfaces being network interfaces between NG-RAN nodes.

In this embodiment of the present disclosure, in a case that the UE has established but not activated an MBS session on a source NG-RAN side before being handed over to a target NG-RAN, that is, any QoS flow is established, the PDU session establishment procedure may be preferentially performed after the registration procedure, but the present disclosure is not limited thereto. In this case, the PDU session establishment procedure may also be performed before the registration procedure.

In a case that the UE has established multiple MBS sessions at the source base station before being handed over to the target base station, assuming that some of the MBS sessions has been activated before handover, that is, QoS flows have been established; and other MBS sessions has not been activated before handover, that is, QoS flows have not been established, a PDU session establishment procedure corresponding to the MBS sessions having been activated before the handover may be preferentially performed before the registration procedure, and a PDU session establishment procedure corresponding to the other MBS sessions having not been activated before the handover may be performed after the registration procedure, so that an MBS session having service data may be preferentially handed over to a PDU session, to improve a response speed of services and meet the timeliness of service switch, the present disclosure is not limited thereto. Multiple PDU session establishment procedures corresponding to multiple MBS sessions may be parallel, independent, and not constrained from each other.

FIG. 4 schematically shows a schematic diagram of Xn based inter NG-RAN handover without UPF re-allocation according to an embodiment of the present disclosure.

As shown in FIG. 4, the UE is handed over from a source NG-RAN to a target NG-RAN at a handover preparation phase and a handover execution phase, the source NG-RANG supporting MBS multicast/broadcast session, and the target NG-RAN not supporting MBS multicast/broadcast session. After the UE is handed over from the source NG-RAN to the target NG-RAN, the target NG-RAN transmits a handover complete indication to the UE. After receiving the handover complete indication, the UE may learn that the UE has successfully accessed to the target NG-RAN. Then, the UE may trigger a PDU session establishment procedure shown in FIG. 5. The PDU session establishment procedure shown in FIG. 5 triggered by the UE is independent of a communication procedure on a network side in FIG. 4. Therefore, the UE may trigger the PDU session establishment procedure at any moment between step 1a and step 8 in FIG. 4, that is, may trigger the PDU session establishment procedure shown in FIG. 5 before step 9 in FIG. 4, or may trigger the PDU session establishment procedure shown in FIG. 5 after step 9 in FIG. 4. In addition, step 9 in FIG. 4 is optionally performed.

Steps shown in FIG. 4 are briefly described below.

Step 1a in FIG. 4 is optional. If a public land mobile network (PLMN) has configured with a secondary radio access technology (RAT) usage report, at the handover execution phase, the source NG-RAN may provide a RAN usage data report, that is, RAN usage data report (N2 SM information (secondary RAT usage data), handover flag, source to target transparent container), to an AMF. The handover flag indicates that the AMF is to buffer N2 SM information before forwarding, the N2 SM information including a usage data report. Source to target transparent container is a source to target transparent container.

Step 1b in FIG. 4 is optional, a target NG-RAN transmits an N2 path switch request to the AMF, to inform that the UE has moved to a new target cell and provides a list of PDU sessions for switch.

In step 2 in FIG. 4, the AMF transmits a Nsmf_PDUSession_UpdateSMContext request to an SMF, that is, a PDU session update session management context request.

In step 3 in FIG. 4, the SMF transmits an N4 session modification request to a UPF.

In step 4 in FIG. 4, the UPF transmits an N4 Session Modification Response to the SMF.

In step 5 in FIG. 4, to assist a reordering function in the target NG-RAN, the UPF transmits one or more "end marker" packets for each N3 tunnel. The UPF starts transmitting downlink data to the target NG-RAN.

In step 6 in FIG. 4, the SMF transmits a Nsmf_PDUSession_UpdateSMContext response, i.e. a PDU session update session management context response, to the AMF.

In step 7 in FIG. 4, the AMF transmits N2 path switch request Ack (that is, an N2 path switch request acknowledgment) to the target NG-RAN.

In step 8 in FIG. 4, by transmitting a release resource message to the source NG-RAN, the target NG-RAN confirms success of the handover. The target NG-RAN then triggers resource release of the source NG-RAN.

The registration procedure in step 9 in FIG. 4 is optional.

FIG. 5 schematically shows a schematic diagram of a process of triggering establishment of a PDU session on a target NG-RAN side according to an embodiment of the present disclosure.

The UE learns from the handover preparation phase in FIG. 4 that the UE needs to be handed over to the target NG-RAN, and then the UE learns, by using a SIB message broadcasted by a target cell, that the target cell does not support MBS multicast/broadcast session and then triggers the PDU session establishment procedure shown in FIG. 5. The PDU session establishment procedure shown in FIG. 5 may be added before or after step 9 in FIG. 4.

As shown in FIG. 5, in step 1 in FIG. 5, the UE transmits an NAS message (S-NSSAI(s), UE requested DNN, PDU session ID, request type, old MBS session ID, N1 SM container (PDU session establishment request, [port management information container])) to the AMF.

It can be learned that the NAS message carries a request type, the request type indicating an existing MBS multicast/broadcast, that is, a new request type being increased.

Old MBS session ID indicates an old MBS multicast/broadcast session ID, which represents an MBS multicast/broadcast session identity (an MBS multicast/broadcast session ID is directly used below) corresponding to an MBS multicast/broadcast session. Old MBS session ID indicates an old MBS multicast session ID, which represents that an MBS multicast service is handed over, or old MBS session ID indicates an old MBS broadcast session ID, which represents that an MBS broadcast service is handed over.

N1 SM container carries a PDU session establishment request. Port Management Information Container represents a port management information container.

A combination of the S-NSSAI and the DNN in the NAS message is a combination of the S-NSSAI and the DNN corresponding to the old MBS multicast/broadcast session. The PDU session established on the target NG-RAN side is used for replacing the MBS multicast/broadcast session on the source NR-RAN side, and a combination of S-NSSAI and DNN of the PDU session on the target NG-RAN is the same as a combination of S-NSSAI and DNN of the original MBS multicast/broadcast session. In this way, service continuity can be maintained.

When the UE simultaneously activates multiple MBS multicast/broadcast sessions, each MBS multicast/broadcast session corresponds to a combination of S-NSSAI and DNN, and a broadcasted SIB message may indicate that the MBS multicast/broadcast is not supported at all, which S-NSSAI does not support the MBS multicast/broadcast, which DNN does not support the MBS multicast/broadcast, or which a combination of S-NSSAI or a DNN does not support the MBS multicast/broadcast session, the UE may determine, according to indication information of the broadcasted SIB message, that corresponding PDU sessions are established on the target NG-RAN side. Multiple MBS multicast/broadcast sessions may be handed over to corresponding PDU sessions in parallel or a handover order may be determined according to presence or absence of a service (that is, whether the MBS session has been activated and whether a QoS flow of an MBS session is present).

For example, in a case that the UE has five MBS multicast/broadcast sessions, because the target NG-RAN does not support the MBS multicast/broadcast session, the five MBS multicast/broadcast sessions may be simultaneously handed over to corresponding PDU sessions, and a handover process of each MBS multicast/broadcast session may be performed independently, for example, may be performed in parallel without a precedence relationship, or some of the five MBS multicast/broadcast sessions, for example, three MBS multicast/broadcast sessions, that have services are handed over first, some other of the five MBS multicast/broadcast sessions, for example, two MBS multicast/broadcast sessions, that have no service are handed over later, so that it can be ensured that the MBS multicast/broadcast sessions with the services are handed over in real time, to maintain service continuity.

In the embodiment of FIG. 5, there is an interface between the SMF and the PCF, that is, there may be two PCFs shown in the embodiment of FIG. 5 (not shown in FIG. 5), one PCF is connected to the MB-SMF, which is referred to as an MB-PCF (not shown in FIG. 5), and may be configured to provide MBS multicast/broadcast session context information for policy control of the entire 5G MBS session, and the other PCF is connected to the SMF, which is referred to as a UE-PCF (not shown in FIG. 5) and is policy used for controlling the PDU session. It may be understood that the MB-PCF and the UE-PCF are independent in logic but may also be a same PCF entity. The SMF and the MB-SMF (not shown in FIG. 5) are independent in logic but may also be a same SMF entity. In this case, a message between the SMF and the MB-SMF does not occur. Similarly, the UPF and the MB-UPF (not shown in FIG. 5) are completely independent in logic but may be a same UPF entity.

In step 2 in FIG. 5, the AMF processes the request type indicating existing MBS multicast/broadcast session as a newly established PDU session, that is, selects a new SMF (the SMF in FIG. 5 is different from the MB-SMF). The AMF selects an SMF according to S-NSSAI and DNN that are provided by the UE.

In step 3a in FIG. 5, the AMF transmits Nsmf_PDUSession_CreateSMContext request message (that is, a protocol data unit session establishment session management context request message, which is referred to as a PDU session establishment session management context request message) to the selected SMF, the Nsmf_PDUSession_CreateSMContext request message carrying DNN, S-NSSAI, request type, old MBS session ID, and N1 SM container, that is, Nsmf_PDUSession_CreateSMContext request (SUPI, selected DNN, UE requested DNN, S-NSSAI(s), PDU session ID, AMF ID, request type (= existing MBS multicast/broadcast session), old MBS session ID, PCF ID, priority access, [small data rate control status], N1 SM container (PDU session establishment request), user location information, access type, RAT type, PEI, GPSI, UE presence in LADN service area, subscription for PDU session status notification, DNN selection mode, trace requirements, control plane CIoT 5GS optimisation indication, or control plane only indicator).

Nsmf_PDUSession_CreateSMContext Request carries a subscription permanent identifier (SUPI), DNN, S-NSSAI, request type (=existing MBS multicast/broadcast session), old MBS session ID=old MBS multicast/broadcast Session ID, and the like. Priority access represents priority access, small data rate control status represent a small data rate control status, user location information represents user location information, access type represents an access type, RAT type represents a RAT type, PEI is an abbreviation of a permanent equipment identifier, GPSI is an abbreviation of a generic public subscription identifier, UE presence in LADN service area represents that the UE exists in a local area data network (LADN) service area, subscription for PDU session status notification represents a subscription for a PDU session status notification, DNN selection mode represents a DNN selection mode, trace requirements represent trace requirements, control plane CIoT 5GS optimisation indication represents a control plane cell Internet of Things (CIoT) 5GS optimization indicator, and control plane only indicator represents a control plane only indicator.

Step X.1 in FIG. 5 may include the following steps X.1.a to X.1.i.

In step X.1.a, the SMF transmits Nnrf_NFDiscovery request message (that is, a network function discovery request message, which is briefly referred to as an NF discovery request message) to an NRF, the Nnrf_NFDiscovery request message carrying an SUPI of the UE and an NF type, and the NF type indicating a UDM, to indicate that a UDM ID is obtained from the NRF.

In step X.1.b, after receiving the Nnrf_NFDiscovery request message (SUPI, NF type indicating the UDM) from the SMF, the NRF finds the UDM ID corresponding to the UE, which is referred to as a UE-UDM ID (that is, a user equipment unified data management function identity corresponding to a user equipment unified data management function) in response to the Nnrf_NFDiscovery request message (SUPI, NF type indicating the UDM), and returns Nnrf_NFDiscovery response message (UE-UDM ID), that is, a network function discovery response message (which is briefly referred to as an NF discovery response message and carries a UE-UDM ID) to the SMF.

In step X.1.c, after receiving the Nnrf_NFDiscovery response message from the NRF, the SMF may learn the UDM corresponding to the UE from the UE-UDM ID carried in the Nnrf_NFDiscovery response message. Therefore, the SMF may transmit Nudm_SDM_Get request message (a subscription data request message) to a UE-UDM corresponding to the UE-UDM ID, the Nudm_SDM_Get request message carrying the UE-UDM ID and the SUPI of the UE.

In step X.1.d, after receiving the Nudm_SDM_Get request message from the SMF, the UE-UDM may transmit Nudr_DM_Query request message (a subscription data query request message) to a UE-UDR, the Nudr_DM_Query request message carrying the SUPI of the UE.

In this embodiment of the present disclosure, a UDR corresponding to the UE-UDM is referred to as a user equipment unified data repository (UE-UDR). A UDM corresponding to the MBS session such as the MBS multicast/broadcast session is referred to as an MB-UDM, that is, a multicast broadcast unified data management function, and a UDR corresponding to the MB-UDM is referred to as an MB-UDR, that is, a multicast/broadcast unified data repository.

It may be understood that in this embodiment of the present disclosure, the MB-UDR and the UE-UDR may be a same UDR or may be different UDRs.

In step X.1.e, after receiving the Nudr_DM_Query request message from the UE-UDM, the UE-UDR may return Nudr_DM_Query response message (a subscription data query response message) to the UE-UDM in response to the Nudr_DM_Query request message, the Nudr_DM_Query response message including MBS session management subscription data of the MBS multicast/broadcast session.

In step X.1.f, after receiving the Nudr_DM_Query response message from the UE-UDR, the UE-UDM may return Nudm_SDM_Get response message (a subscription data get response message) to the SMF in response to the Nudm_SDM_Get request message, the Nudm_SDM_Get response message carrying the MBS session management subscription data of the MBS multicast/broadcast session.

In step X.1.g, after receiving the Nudm_SDM_Get response message, the SMF may transmit Nudm_SDM_Subscribe request message (a subscription data subscribe request message) to the UE-UDM, the Nudm_SDM_Subscribe request message carrying the SUPI, the MBS session management subscription data of the MBS multicast/broadcast session, the DNN, and the S-NSSAI.

In step X.1.h, after receiving the Nudm_SDM_Subscribe request message, the UE-UDM may transmit Nudr_DM_Subscribe message (a subscription data subscription message) to the UE-UDR, the Nudr_DM_Subscribe message carrying the MBS session management subscription data of the MBS multicast/broadcast session.

In step X.1.i, the UE-UDM may return Nudm_SDM_Subscribe response message (a subscription data subscribe response message) to the SMF.

In step X.1 in the embodiment of FIG. 5, the session management subscription data in Nudm_SDM_Get (which includes request and response messages) and the session management subscription data in Nudm_SDM_Subscribe (which includes request and response messages) indicate MBS session management subscription data. Similarly, the session management subscription data in Nudr_DM_Query (which includes request and response messages) and the session management subscription data in Nudr_DM_Subscribe (which includes request and response messages) indicate MBS session management subscription data. In step X.1 in the embodiment of FIG. 5, the SMF queries the NRF by using the SUPI of the UE for the UE-UDM. In step X.1 in the embodiment of FIG. 5, the UE-UDM is configured to store the MBS session management subscription data of the UE and may learn, according to the MBS session management subscription data, whether S-NSSAI and DNN have been subscribed. If no subscription, the following steps in FIG. 5 are not performed. That is, in step X.1, whether a PDU session is allowed to be established is checked, the MBS session management subscription data including multiple pieces of information such as an allowed maximum bandwidth and billing.

If the UE has multiple MBS multicast/broadcast sessions, which are handed over to corresponding unicast PDU sessions, the UE perform the entire process in FIG. 5 for each PDU session. Therefore, S-NSSAI and a DNN of a PDU session corresponding to each MBS multicast/broadcast session are specified in all the processes.

A step X.2 is further added in this embodiment of the present disclosure and may specifically include step X.2.a to step X.2.d.

In step X.2.a, the SMF transmits Nnrf_NFDiscovery request message (that is, a network function discovery request message, which is briefly referred to as an NF discovery request message) to the NRF, the Nnrf_NFDiscovery request message carrying an MBS session ID, that is, the MBS session ID indicating MBS multicast/broadcast session ID and an NF type, and the NF type indicating an MBS UDM, to indicate that an MB-UDM ID is obtained from the NRF. In a case that the MBS session ID indicates an MBS multicast session ID, it indicates that an MB-UDM ID corresponding to the MBS multicast session ID is queried. In a case that the MBS session ID indicates an MBS broadcast session ID, it indicates that an MB-UDM ID corresponding to the MBS broadcast session ID is queried.

In step X.2.b, when receiving the Nnrf_NFDiscovery request message in step X.2.a, the NRF may learn, from the MBS session ID indicating the MBS multicast/broadcast session ID and the NF type indicating the MBS UDM in the Nnrf_NFDiscovery request message in step X.2.a, that the MB-UDM ID corresponding to the MBS multicast/broadcast session needs to be queried. Therefore, the NRF returns Nnrf_NFDiscovery response message (a network function discovery response message, which is briefly referred to as an NF discovery response message) to the SMF, the Nnrf_NFDiscovery response message carrying an MB-UDM ID (a multicast broadcast unified data management function identity of a multicast broadcast unified data management function).

In the embodiment of FIG. 5, the SMF queries the NRF for an MB-UDM by using old MBS multicast/broadcast session ID and then subscribes to the MB-UDM by using Nudm_MBSSessionContextSubscribe Request (MBS Multicast/Broadcast Session ID, MB-SMF ID). The subscription is used for the MB-UDM to notify the SMF when the MBS multicast/broadcast session status and information stored in the MB-UDM are changed. A main difference between the new step X.2 and step X.1 is that in step X.1, the SMF may obtain the UE-UDM by querying the NRF through the SUPI of the UE, but in step X.2, the SMF obtains the MB-UDM by querying the NRF through the MBS multicast/broadcast session ID rather than through the SUPI of the UE. Therefore, the MB-UDM and the UE-UDM of step X.2 are two UDMs that are completely different from those of step X.1, and the MB-UDM is the UDM serving the MB-SMF, that is, the UDM corresponding to the MBS session context information.

The embodiment of FIG. 5 may further include step X.3, which may specifically include steps X3.a to X. 3. d.

In step X.3.a, the SMF transmits a Nudm_MBSSessionContextGet request message (an MBS session context get request message) to the MB-UDM, an MBS session ID carried in the Nudm_MBSSessionContextGet request message being old MBS multicast/broadcast session ID.

In step X.3.b, after receiving the Nudm_MBSSessionContextGet request message carrying the MBS session ID indicating old MBS multicast/broadcast session ID, the MB-UDM transmits Nudr_DM_Query request message (a first data management query request message) to the MB-UDR, the Nudr_DM_Query request message carrying the MBS session ID, which is old MBS multicast/broadcast session ID and a type indicating MBSSessionInfor (MBS session information, which is used for indicating that MBS session information is obtained).

In step X.3.c, after receiving the Nudr_DM_Query request message in step X.3.b, the MB-UDR queries for MBS session context information according to the MBS session ID, that is, old MBS session ID, and the type indicating MBSSessionInfor in the Nudr_DM_Query request message (if the MBS session ID corresponds to old MBS multicast session ID, the MBS session context information is MBS multicast session context information; and in a case that the MBS session ID corresponds to the old MBS broadcast session ID, the MBS session context information is MBS broadcast session context information), and returns a Nudr_DM_Query response message (a first data management query response message) to the MB-UDM, the Nudr_DM_Query response message carrying a key indicating MBS session ID, a type indicating MBSSessionInformation (that is, multicast broadcast service session information, which is briefly referred to as MBS session information), and data, the data further including an MB-SMF ID, an MB-PCF ID information, and a temporary mobile group identity (TMGI), that is, returned data not including an MB-UPF ID and a list of QoS Flow information.

In step X.3.d, the MB-UDM returns a Nudm_MBSSessionContextGet response message (that is, a first MBS session context get response message) to the SMF after receiving the Nudr_DM_Query response message, the Nudm_MBSSessionContextGet response message carrying an MBS multicast/broadcast session ID, an MB-SMF ID, and an MB-PCF ID. In a case that the SMF obtains the first MBS session context get response message and discovers that the MB-UPF ID and the list of QoS flow information are not included in the message, it may be determined that the MBS session has not been activated.

In step X.2.c, after receiving the Nnrf_NFDiscovery response message in step X.2.b, the SMF may transmit Nudm_MBSSessionContextSubscribe request message (that is, an MBS session context subscribe request message) to the MB-UDM corresponding to the MB-UDM ID, the Nudm_MBSSessionContextSubscribe request message carrying the MBS multicast/broadcast session ID and the MB-SMF ID.

In step X.2.d, after receiving the Nudm_MBSSessionContextSubscribe request message, the MB-UDM may cause, according to MBS multicast/broadcast session ID and MB-SMF ID carried in the Nudm_MBSSessionContextSubscribe request message, the SMF to subscribe to the MB-UDM, and may return Nudm_MBSSessionContextSubscribe response message (that is, an MBS session context subscribe response message) to the SMF, to inform the SMF that the SMF has successfully subscribed to the MB-UDM.

In step 3b in FIG. 5, the SMF returns Nsmf_PDUSession_CreateSMContext response message (that is, a protocol data unit session establishment session management context response message), which is a response to the Nsmf_PDUSession_CreateSMContext request message, to the AMF.

In step 4 in FIG. 5, PDU session authentication/authorization is performed.

In step 5 in FIG. 5, the SMF triggers an SM policy association modification procedure in a case that the UE-PCF is deployed and a dynamic policy is used. The SMF provides the QoS information such as packet filter, 5QI, and ARP of each QoS flow corresponding to the MBS session service flow obtained from the MB-UDM to the selected UE-PCF, to request the UE-PCF to check whether the QoS information of the MBS session service flows meets policy rules of users and networks. The UE-PCF issues a new authorized policy rule according to the policy of the user and the network, that is, the QoS information such as packet filter, 5QI, and ARP of each MBS session service flow, and even if the QoS information is not modified, the UE-PCF still needs to transmit the QoS information of the MBS session service flow provided by the SMF to the SMF again.

If the selected UE-PCF is the MB-PCF, and the Npcf_SMPolicyControlCreate Request message transmitted by the SMF to the MB-PCF further includes MBS session ID, the MBS session ID indicating MBS multicast/broadcast session ID, which is used for the MBS multicast/broadcast session and corresponding to the MBS multicast/broadcast session, the MB-PCF may adopt corresponding authorized policy rules to the SMF according to the user, the network, and the MBS multicast/broadcast session ID. That is, QoS information such as packet filter, 5QI, and ARP of each MBS session service flow, even if the QoS information is not modified, the MB-PCF still needs to transmit the QoS information of the MBS session service flow provided by the SMF to the SMF again.

In step 6 in FIG. 5, the SMF selects a UPF. If the SMF finds that the SMF is an MB-SMF, the SMF directly selects an MB-UPF as the UPF.

In step 7a in FIG. 5, the SMF transmits N4 Session Establishment Request message to the selected UPF.

In step 7b in FIG. 5, the UPF transmits N4 Session Establishment Response message to the SMF for confirmation.

In step 8 in FIG. 5, the SMF transmits a Namf_Communication _N1N2MessageTransfer message (that is, a communication N1N2 message transfer message) to the AMF and requests the AMF to transmit a message on an N1 interface and a message on a N2 interface, and the SMF wants the AMF to respectively forward information related to SM to the UE and the target NG-RAN.

In step 9 in FIG. 5, the AMF transmits an N2 PDU session request message to the target NG-RAN.

Specifically, N2 PDU Session Request (N2 SM information, NAS message (PDU session ID, N1 SM container (PDU session establishment accept)), [CN assisted RAN parameters tuning]). That is, N2 PDU session request transmitted by the AMF to the target NG-RAN includes NAS message and N2 SM information received from the SMF, NAS message including PDU session ID transmitted to the UE and PDU session establishment accept.

In step 10 in FIG. 5, radio resource control (RRC) reconfiguration is performed between the target NG-RAN and the UE.

In step 11 in FIG. 5, the target NG-RAN transmits an N2 PDU session request acknowledgment (N2 PDU Session Request Ack) to the AMF.

In step 12 in FIG. 5, the AMF transmits Nsmf_PDUSession_UpdateSMContext request the SMF.

The AMF transmits Nsmf_PDUSession_UpdateSMContext Request (SM context ID, N2 SM information, request type) to the SMF, and the AMF delivers N2 SM information to the SMF by using an update SM context service provided by the SMF. The N2 SM information has some parameters about the QoS flow(s), and the SMF may update content of session context in time.

In step 13a in FIG. 5, the SMF transmits an N4 session modification request to the UPF, hopes to transmit access network tunnel information (AN Tunnel Info) from the target NG-RAN to conduct an N3 downlink tunnel, and finally informs the UPF of a downlink forwarding rule. N2 SM information has one parameter: AN Tunnel Info, which identifies session in a target NG-RAN side node of the N3 interface. Once the SMF delivers AN Tunnel Info to the UPF, the downlink tunnel of the N3 interface of the session is conducted.

In step 13b in FIG. 5, the UPF returns an N4 session modification response (N4 Session Modification Response) to the SMF.

In step 14 in FIG. 5, the SMF returns Nsmf_PDUSession_UpdateSMContext response to the AMF.

Step 15 in FIG. 5 is optional, the SMF transmits Nsmf_PDUSession_SMContextStatusNotify message to the AMF.

Step 16 of FIG. 5 is optional. The UPF transmits Internet Protocol Version 6 (IPv6) address configuration to the target NG-RANG, and the target NG-RANG transmits IPv6 address configuration to the UE.

Since the first MBS session context get response message transmitted by the MB-UDM to the SMF does not include the list of QoS flow information, the SMF may determine that the MBS session has not been activated. Therefore, the QoS flow corresponding to the MBS session is not established in the PDU session establishment procedure in FIG. 5.

FIG. 6 schematically shows a schematic diagram of a process of triggering modification of a PDU session on a target NG-RAN side according to an embodiment of the present disclosure.

As shown in FIG. 6, after the PDU session has been established on a target RAN or a target NG-RAN side by using the method of the embodiment shown in FIG. 5, the SMF has subscribed to an MB-UDM and determines that an MBS session has been activated, and MBS session context information has been updated, step 1 shown in FIG. 6 may be performed, that is, the MB-UDM transmits a notify message to the SMF to notify the SMF that the MBS session has been activated, and the MBS session context information has been updated, so that the SMF may trigger the PDU session modification procedure shown in FIG. 6.

The embodiment of FIG. 6 may include step X.4, which may specifically include steps X.4.a to X.4.d.

In step X.4.a, the SMF transmits a Nudm_MBSSessionContextGet request message (a second MBS session context get request message) to the MB-UDM, an MBS session ID carried in the Nudm_MBSSessionContextGet request message being old MBS multicast/broadcast session ID.

In step X.4.b, after receiving the Nudm_MBSSessionContextGet request message carrying the MBS session ID indicating old MBS multicast/broadcast session ID, the MB-UDM transmits Nudr_DM_Query request message (a second data management query request message) to the MB-UDR, the Nudr_DM_Query request message carrying the MBS session ID, which is old MBS multicast/broadcast session ID and a type indicating MBSSessionInfor (which is used for indicating that MBS session information is obtained).

In step X.4.c, after receiving the Nudr_DM_Query request message in step X.4.b, the MB-UDR queries for MBS session context information according to the MBS session ID, that is, old MBS session ID, and the type indicating MBSSessionInfor in the Nudr_DM_Query request message (if the MBS session ID corresponds to old MBS multicast session ID, the MBS session context information is MBS multicast session context information; and if the MBS session ID corresponds to old MBS broadcast session ID, the MBS session context information is MBS broadcast session context information), and returns Nudr_DM_Query response message (a second data management query response message) to the MB-UDM, the Nudr_DM_Query response message carrying a key indicating MBS session ID, a type indicating MBSSessionInformation (that is, multicast broadcast service session information), and data, the data further including an MB-SMF ID, an MB-UPF ID, an MB-PCF ID information, a TMGI, and list of information {QoS flow}, the list of QoS flow information further including all QoS flows of the MBS multicast/broadcast session (information related to one or more QoS flows (that is, all the QoS flow information) such as QoS flow identity (QFI), QoS profile, QoS rule and packet filter, and N4 rule).

In step X.4.d, after receiving the Nudr_DM_Query response message, the MB-UDM returns Nudm_MBSSessionContextGet response message (that is, a second MBS session context get response message) to the SMF, the Nudm_MBSSessionContextGet response message carrying multi-cast broadcast service session context information (which is briefly referred to as MBS session context information), the MBS session context information including an MBS multicast/broadcast session ID, an MB-SMF ID, an MB-UPF ID, an MB-PCF ID, and all QoS flow information corresponding to the MBS session, there being one or more pieces of QoS flow information, for example, a QFI, a QoS profile, a QoS rule, a packet filter, and an N4 rule of all the QoS flow information listed in FIG. 6.

The Nudm_MBSSessionContextGet response message in step X.4.d may further include a parameter MB-UPF access information (MB-UPF access information such as IP tunnel access information or a transport layer IP multicast address and a common tunnel endpoint identity (C-TEID)). The transport layer IP multicast address is only used as MBS service data between the UPF and the MB-UPD and the transport layer IP multicast address and the C-TEID are allocated by the MB-UPF.

In this embodiment of the present disclosure, because the MBS multicast session is shared by multiple UEs rather than occupied by the only UE, that is, the MBS multicast session ID is shared by the multiple UEs, the MBS multicast session context information can be obtained according to only the MBS multicast session ID rather than the SUPI of the UE. Similarly, because the MBS broadcast session is shared by multiple UEs rather than occupied by the only UE, that is, the MBS broadcast session ID is shared by the multiple UEs, the MBS broadcast session context information can be obtained according to only the MBS broadcast session ID rather than the SUPI of the UE.

Step 2 in FIG. 6 is optional, the SMF initiates SM policy association modification in a case that the PCF is deployed and a dynamic policy is used. The SMF provides the QoS information such as packet filter, 5QI, and ARP of each QoS flow corresponding to the MBS session service flow obtained from the MB-UDM to the selected PCF, to request the PCF to check whether the QoS information of the MBS session service flows meets policy rules of users and networks. The PCF issues a new authorized policy rule according to the policy of the user and the network, that is, the QoS information such as packet filter, 5QI, and ARP of each MBS session service flow, and even if the QoS information is not modified, the PCF still needs to transmit the QoS information of the MBS session service flow provided by the SMF to the SMF again.

In a case that the selected PCF is the MB-PCF, and the Npcf_SMPolicyControlCreate Request message transmitted by the SMF to the MB-PCF further includes MBS session ID, the MBS session ID indicating MBS multicast/broadcast session ID, which is used for the MBS multicast/broadcast session and corresponding to the MBS multicast/broadcast session, the MB-PCF may adopt corresponding authorized policy rules to the SMF according to the user, the network, and the MBS multicast/broadcast session ID. That is, QoS information such as packet filter, 5QI, and ARP of each MBS session service flow, even if the QoS information is not modified, the PCF still needs to transmit the QoS information of the MBS session service flow provided by the SMF to the SMF again.

In step 2a in FIG. 6, the SMF transmits an N4 session establishment/modification request to a UPF (I-UPFs). One or more N4 rules corresponding to each QoS flow are transmitted to the UPF. For each QoS Flow, there may be multiple corresponding N4 rules.

In step 2b in FIG. 6, the UPF (I-UPFs) transmits an N4 session establishment/modification response to the SMF.

In step 3b in FIG. 6, the SMF transmits a Namf_Communication _N1N2MessageTransfer message (that is, a communication N1N2 message transfer message) to the AMF and requests the AMF to transmit a message on an N1 interface and a message on a N2 interface, and the SMF wants the AMF to respectively forward information related to SM to the UE and the target NG-RAN.

Specifically, the SMF triggers Namf_Communication _N1N2MessageTransfer ([N2 SM information] (PDU session ID, QFI(s), QoS profile(s), [alternative QoS profile(s)], session-AMBR, [CN tunnel Info(s)], QoS monitoring indication, QoS monitoring reporting frequency, [TSCAI(s)]), N1 SM container (PDU session modification command (PDU Session ID, QoS rule(s), QoS flow level QoS parameters if needed for the QoS Flow(s) associated with the QoS rule(s), QoS rule operation and QoS flow level QoS parameters operation, Session-AMBR))).

The PDU session ID in Namf_Communication _N1N2MessageTransfer is to let the AMF learn that the AMF provides a transfer service for which session of the UE.

N2 SM information (N2 session management information) is for the target NR-RAN and mainly includes: PDU Session ID, QFI(s), QoS profile(s), core network tunnel information (CN tunnel Info), session-aggregate maximum bit rate (Session-AMBR), and PDU session type. The target NG-RAN configures multiple QoS flows of one session by using QoS profile(s). CN tunnel Info is used for identifying the session in a UPF side node of an N3 interface.

N1 SM container (N1 session management container) is for the UE, which is an SM message, that is, session established accept, and mainly includes: QoS rule(s), S-NSSAI(s), DNN, IP address, and session-AMBR. The UE configures multiple QoS flows of one session by using QoS rule(s). The IP address is used for data routing after the UE exits from the UPF.

The QoS profile(s) and the QoS rule(s) mentioned herein are QoS profile and QoS rule that correspond to each QoS flow. If there are multiple QoS flows, one message includes QoS profile and QoS rule that correspond to each QoS flow. In 5G, one session and multiple QoS flows may be configured once in this manner, to greatly improve signaling efficiency. Each QoS Flow and parameters thereof respectively correspond to a MBS QoS flow and parameters thereof corresponding to the MBS session, that is, the SMF maps each MBS QoS flow and parameters thereof corresponding to the MBS session to one QoS flow and parameters thereof corresponding to the PDU Session.

In step 4 in FIG. 6, the AMF transmits an N2 message (N2 Message) to the target RAN. The target RAN is commanded to establish the each QoS flow above.

In step 5 in FIG. 6, the UE transmits AN-specific resource modification transfer (including a PDU session modification command, and a wireless specific resource modification message, for example, RRCReconfiguration message to establish a data radio bearer (DRB) for transmitting each QoS flow) to the target RAN.

In step 6 in FIG. 6, the target RAN transmits the N2 message to the AMF to confirm that radio resources corresponding to each QoS flow has been allocated.

In step 7a in FIG. 6, the AMF transmits a Nsmf_PDUSession_UpdateSMContext request to the SMF.

In step 7b in FIG. 6, the SMF transmits a Nsmf_PDUSession_UpdateSMContext request to the AMF.

In step 8a in FIG. 6, the SMF transmits an N4 session modification request to the UPF.

In step 8b in FIG. 6, the UPF transmits an N4 session modification response to the SMF.

In step 9 in FIG. 6, the UE transmits a PDU session modification command acknowledgement (PDU session modification command Ack) to the target RAN.

In step 10 in FIG. 6, the target RAN transmits N2 NAS uplink transfer to the AMF.

In step 11a in FIG. 6, the AMF transmits a Nsmf_PDUSession_UpdateSMContext request to the SMF.

In step 11b in FIG. 6, the SMF transmits a Nsmf_PDUSession_UpdateSMContext request to the AMF.

Step 12a in FIG. 6 is optional, the SMF transmits an N4 session modification request to the UPF.

Step 12b in FIG. 6 is optional, the UPF transmits an N4 session modification response to the SMF.

Step 13 in FIG. 6 is optional, the SMF initiates SM policy association modification.

FIG. 7 schematically shows a schematic diagram of an execution phase of inter NG-RAN node N2 based handover according to an embodiment of the present disclosure. Before FIG. 7, a preparation phase of inter NG-RAN node N2 based handover may further be included.

S-NG-RAN in FIG. 7 refers to a source NG-RAN supporting an MBS or may represent S-RAN corresponding to S-AMF and S-UPF. T-NG-RAN refers to a target NG-RAN not supporting the MBS or may represent T-RAN corresponding to T-AMF and T-UPF. PSA in UPF(PSA) is a PDU session anchor.

In step 1 in FIG. 7, the S-AMF transmits a handover command to the S-RAN.

In step 2 in FIG. 7, the S-RAN transmits the handover command to the UE.

Step 2a in FIG. 7 is optional. In step 2a in FIG. 7, the S-RAN transmits an uplink RAN status transfer (Uplink RAN Status Transfer) message to the S-AMF.

Step 2b in FIG. 7 is optional. In step 2b in FIG. 7, the S-AMF transmits Namf_Communication _N1N2MessageTransfer service operation to the T-AMF, and the T-AMF acknowledges.

Step 2c in FIG. 7 is optional. In step 2c in FIG. 7, the S-AMF or, if the AMF is relocated, the T-AMF transmits a downlink RAN status transfer message (Downlink RAN Status Transfer message) to the T-RAN.

Uplink packets in FIG. 7 are transmitted from the T-RAN to the T-UPF and the UPF (PSA). Downlink packets are transmitted from the UPF (PSA) to the S-RAN through the S-UPF. The S-RAN is to start forwarding of downlink data from the S-RAN towards the T-RAN. This may be either direct data forwarding (step 3a in FIG. 7) or indirect data forwarding (step 3b in FIG. 7). Step 3a and step 3b in FIG. 7 are optional. The UE synchronizes to a new cell (that is, a target cell corresponding to the target base station).

In step 4 in FIG. 7, the UE transmits a Handover Confirm message to the T-RAN, that is, the UE indicates to the network that the UE has handed over to the target RAN. After the UE has successfully synchronized to the target cell, the UE transmits a Handover Confirm message to the T-RAN. It is considered that handover is successfully performed by the UE based on the Handover Confirm message. After the UE has synchronized to the new cell or the UE has confirmed that the handover succeeds, the UE may trigger the PDU session establishment procedure in the embodiment of FIG. 5 at any time, to establish a PDU session on the target base station side.

In step 5 in FIG. 7, the T-RAN transmits Handover Notify to the T-AMF.

Step 6a in FIG. 7 is optional. The T-AMF transmits Namf_Communication_N2InfoNotify to the S-AMF.

Step 6b in FIG. 7 is optional. The S-AMF transmits Namf_Communication_N2InfoNotify ACK to the T-AMF.

Step 6c in FIG. 7 is optional. The S-AMF transmits Nsmf_PDUSession_ReleaseSMContext Request to the SMF.

In step 7 in FIG. 7, the T-AMF transmits Nsmf_PDUSession_UpdateSMContext Request to the SMF.

Step 8a in FIG. 7 is optional. The SMF transmits N4 Session Modification Request to the T-UPF.

Step 8b in FIG. 7 is optional. The T-UPF transmits N4 Session Modification Response to the SMF.

Step 9a in FIG. 7 is optional. The SMF transmits N4 Session Modification Request to the S-UPF.

Step 9b in FIG. 7 is optional. The S-UPF transmits N4 Session Modification Response to the SMF.

Step 10a in FIG. 7 is optional. The SMF transmits N4 Session Modification Request to the UPF (PSA).

Step 10b in FIG. 7 is optional. The UPF (PSA) transmits N4 Session Modification Response to the SMF.

In step 11 in FIG. 7, the SMF transmits Nsmf_PDUSession_UpdateSMContext Response to the T-AMF.

In step 12 in FIG. 7, the UE triggers the registration procedure.

The UE may trigger the PDU session establishment procedure shown in FIG. 5 before the registration procedure in step 12 or after the registration procedure in step 12 in FIG. 7.

Step 13a in FIG. 7 is optional. The SMF transmits N4 session release request to the S-UPF.

Step 13b in FIG. 7 is optional. The S-UPF transmits N4 session release response to the SMF.

In step 14a in FIG. 7, the AMF transmits UE context release command (), that is, a UE contact release command to the S-RAN.

In step 14b in FIG. 7, the S-RAN transmits UE context release command complete (), that is, UE context release command complete, to the AMF.

Step 15a in FIG. 7 is optional. The SMF transmits N4 session modification request to the T-UPF.

Step 15b in FIG. 7 is optional. The T-UPF transmits N4 session modification response to the SMF.

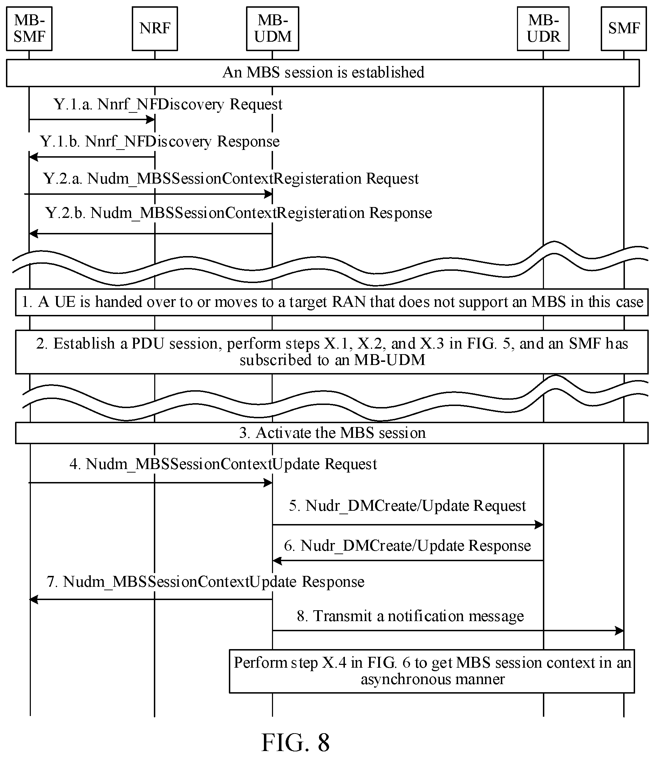

FIG. 8 schematically shows a schematic diagram of storage and obtaining of MBS multicast session context information according to an embodiment of the present disclosure.

In step X.3 in the embodiment of FIG. 6, the SMF needs to obtain the MBS multicast/broadcast session context information by using the MBS multicast/broadcast session ID. Therefore, in an MBS session such as MBS multicast/broadcast session activation procedure in the embodiment of FIG. 8, related information is stored in a dedicated UDM and UDR, which are referred to as an MB-UDM and an MB-UDR.

Before step Y.1.a in FIG. 8 is performed, the UE has joined an MBS multicast/broadcast session, that is, the MBS session has been established and not activated.

In FIG. 8, the process may include the following steps.

In step Y.1.a, the MB-SMF transmits a Nnrf_NFDiscovery request message (an NF discovery request message) to the NRF, the Nnrf_NFDiscovery request message carrying an MBS session ID indicating MBS multicast/broadcast session ID and an NF type indicating MBS UDM.

In step Y 1.b in FIG. 8, after receiving the Nnrf_NFDiscovery request message, the NRF queries a corresponding MB-UDM ID according to the MBS multicast/broadcast session ID and the NF type indicating the MBS UDM that are carried in the Nnrf_NFDiscovery request message, and returns a Nnrf_NFDiscovery response message (an NF discovery response message) to the MB-SMF, the Nnrf_NFDiscovery response message carrying the MB-UDM ID.

In step Y2.a in FIG. 8, after receiving the Nnrf_NFDiscovery response message, the MB-SMF may transmit Nudm_MBSSessionContextRegisteration request (an MBS session context registration request message) to the corresponding MB-UDM according to the MB-UDM ID carried in the Nnrf_NFDiscovery response message, the Nudm_MBSSessionContextRegisteration request carrying the MBS session ID (which indicates the MBS multicast/broadcast session ID) and an MB-SMF ID.

In step Y2.b in FIG. 8, after receiving the Nudm_MBSSessionContextRegisteration request, the MB-UDM registers the MB-SMF with the MB-UDM and returns Nudm_MBSSessionContextRegisteration response (that is, a MBS session context registration response message) to the MB-SMF.

Since multiple UEs may be handed over to the target RAN (which may be different) that does not support the MBS, different UEs respectively establish different PDU sessions, which may correspond to different SMFs, through the foregoing steps, multiple SMFs subscribe to the MB-UDM. Corresponding to a subsequent step 8 in FIG. 8, the MB-UDM also respectively transmits a notification message to the SMFs that perform subscription.

A delay wave line between step Y.2.b and step 1 in FIG. 8 is used for representing that the processes before step 1, step 1, and all processes after step 1 may not be performed together immediately, that is, after step Y2.b may be performed for a period of time, step 1 is performed, that is, steps are performed in an asynchronous manner.

In step 1 in FIG. 8, the UE is handed over or moves to the target RAN not supporting the MBS, and the MBS session has still not been activated in this case.

In step 2 in FIG. 8, the PDU session may be established using the method in the embodiment of FIG. 5, steps X.1, X.2, and X.3 in the embodiment of FIG. 5 are performed, and the SMF has subscribed to the MB-UDM.

A delay wave line between step 2 and step 3 in FIG. 8 is used for representing that the processes before step 2, step 3, and all processes after step 3 are not performed together immediately, that is, step 3 is performed after step 2 is performed for a period of time, that is, steps are performed in an asynchronous manner.

In step 3 in FIG. 8, in this case, a 5G network activates an MBS session such as the MBS multicast/broadcast session corresponding to the MBS multicast/broadcast session ID, one or more QoS flows corresponding to the activated MBS session are established, an MB-UPF is selected for the MBS session and an MB-UPF ID is determined.

In step 4 in FIG. 8, after the MBS session is activated and the MB-UPF is selected for the MBS session, the MB-SMF transmits Nudm_MBSSessionContextUpdate request (a multicast broadcast service session context update request, which is briefly referred to as an MBS session context update request) message to the MB-UDM, the Nudm_MBSSessionContextUpdate request message carrying an MBS multicast/broadcast session ID, an MB-SMF ID, an MB-UPF ID, an MB-PCF ID, a transfer layer IP multicast address, a C-TEID, a TMGI, and list of QoS flow information, the list of QoS flow information further including a QFI, QoS configuration, a QoS rule, a packet filter, and an N4 rule, that is, the list of QoS flow information including all QoS flow information corresponding to the MBS session, and there being one or more pieces of QoS flow information.

In step 5 in FIG. 8, after receiving the Nudm_MBSSessionContextUpdate request message, the MB-UDM transmits a Nudr_DMCreate/Update request message (a data management create/update request message) to the MB-UDR, the Nudr_DMCreate/Update request carrying MBS multicast/broadcast session ID and MBSSessionInformation (MBS session information), the MBSSessionInformation further including an MB-SMF ID, an MB-UPF ID, a transfer layer IP multicast address, a C-TEID, an MB-PCF ID, TMGI, and a list, the list further including a QFI, QoS configuration, a QoS rule, a packet filter, and an N4 rule. In addition, MBS multicast/broadcast session ID, MB-SMF ID, MB-UPF ID, MB-PCF ID, transport layer IP multicast address, C-TEID, TMGI, and all the QoS flow information corresponding to the MBS session are stored in the MB-UDM, there being one or more pieces of all the QoS flow information stored in the MB-UDM.

In step 6 in FIG. 8, after receiving the Nudr_DMCreate/Update request message, the MB-UDR stores MBS multicast/broadcast session ID and MBSSessionInformation carried in the Nudr_DMCreate/Update request message in the MB-UDR and returns Nudr_DMCreate/Update response (data management create/update response) message to the MB-UDM.

In step 7 in FIG. 8, after receiving the Nudr_DMCreate/Update response message, the MB-UDM returns a Nudm_MBSSessionContextUpdate response() message, i.e. an MBS session context update response message, to the MB-SMF.

In step 8 in FIG. 8, after the Nudm_MBSSessionContextUpdate response() message is received by the MB-SMF, the MB-UDM transmits the notification message (notification Correlation ID), that is, the notify message in FIG. 6 according to the SMF that subscribes to the MB-UDM in step Y2.a, so that the SMF learns that the MBS session has been activated, and the MBS session context information has been updated, thereby causing the SMF to trigger step X.4 in FIG. 6 to acquire the MBS session context information in an asynchronous manner.

In step Y2.b, the MB-UDM may be subscribed by multiple SMFs. In such a step, the MB-UDM respectively transmits a notification message to the SMFs that perform subscription. Different PDU session modification procedures are performed on different SMFs. The SMF learns, according to a notification correlation ID, that a PDU session corresponding to the notification message belongs to which UE.

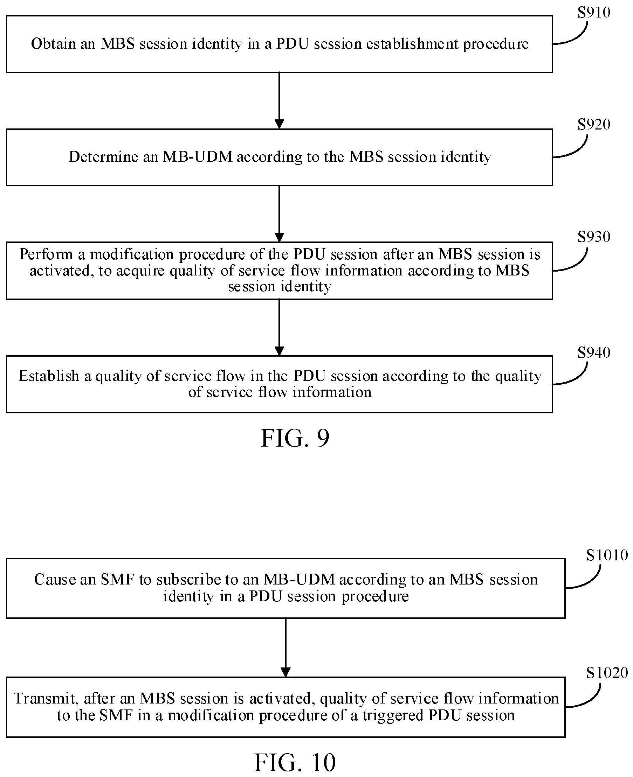

FIG. 9 schematically shows a flowchart of a method for implementing multi-cast broadcast service handover according to the present invention. A description is made by using an example in which the method shown in the embodiment of FIG. 9 is performed by a session management function (SMF). A user equipment has been handed over from a source base station to a target base station, the source base station supporting an MBS, and the target base station not supporting the MBS, and the user equipment, before handover, has established and not activated a MBS session at the source base station. As shown in FIG. 9, the method provided in this embodiment of the present disclosure includes the following steps.

S910: Obtain an MBS session identity of the MBS session in a process of establishing a protocol data unit (PDU) session on a target base station side triggered by the user equipment, single network slice selection assistance information (S-NSSAI) of the PDU session being the same as S-NSSAI of the MBS session, and a DNN of the PDU session being the same as a DNN of the MBS session.

In an exemplary embodiment, the obtaining an MBS session identity of the MBS session may include: receiving a PDU session establishment session management context request message from an access and mobility management function (AMF), the PDU session establishment session management context request message including the MBS session identity.

In an exemplary embodiment, the PDU session establishment session management context request message may further include the S-NSSAI, the DNN, a request type, and a N1 session management container, the request type indicating an existing MBS session, and the N1 session management container carrying a PDU session establishment request.

S920: Determine a multicast broadcast unified data manager (MB-UDM) of the MBS session according to the MBS session identity.

In an exemplary embodiment, the determining an MB-UDM of the MBS session according to the MBS session identity may include: transmitting a network function (NF) discovery request message to a network repository function (NRF), the NF discovery request message including the MBS session identity and an NF type, the NF type indicating an MBS unified data manager (MBS UDM), so that the NRF determines an MB-UDM identity of the MB-UDM according to the MBS session identity and the NF type; and receiving an NF discovery response message returned by the NRF in response to the NF discovery request message, the NF discovery response message carrying the MB-UDM identity.

In an exemplary embodiment, before the determining an MB-UDM of the MBS session according to the MBS session identity, the method may further include: determining a user equipment-unified data manager (UE-UDM) according to a subscription permanent identifier (SUPI) of the user equipment; acquiring MBS session management subscription data of the MBS session from the UE-UDM according to the SUPI; and determining, according to the MBS session management subscription data, that the S-NSSAI and the DNN have been subscribed to the UE-UDM.

S930: Trigger a modification procedure of the PDU session after the MBS session is activated, and acquire quality of service flow information corresponding to the activated MBS session from the MB-UDM according to an MBS session identity of the activated MBS session.

There are one or more pieces of quality of service flow information.

In an exemplary embodiment, before the triggering a modification procedure of the PDU session after the MBS session is activated, and acquiring quality of service flow information corresponding to the activated MBS session from the MB-UDM according to an MBS session identity of the activated MBS session, the method may further include: transmitting an MBS session context subscribe request message to the MB-UDM according to the MB-UDM identity, the MBS session context subscribe request message including the MBS session identity, a notification correlation identity (ID), and an MB-SMF identity of the MBS session, so that the MB-UDM causes, according to the MBS session identity, the notification correlation ID, and the MB-SMF identity, the SMF to subscribe to the MB-UDM; and receiving an MBS session context subscribe response message returned by the MB-UDM in response to the MBS session context subscribe request message.

In an exemplary embodiment, before the triggering a modification procedure of the PDU session after the MBS session is activated, and acquiring quality of service flow information corresponding to the activated MBS session from the MB-UDM according to an MBS session identity of the activated MBS session, the method may further include: transmitting a first MBS session context get request message to the MB-UDM, the first MBS session context get request message including the MBS session identity; receiving a first MBS session context get response message returned by the MB-UDM in response to the first MBS session context get request message; and determining, in a case that the first MBS session context get response message does not carry any quality of service flow information corresponding to the MBS session, that the MBS session is not activated.

In an exemplary embodiment, the triggering a modification procedure of the PDU session after the MBS session is activated, and acquiring quality of service flow information corresponding to the activated MBS session from the MB-UDM according to an MBS session identity of the activated MBS session may include: receiving a notification message transmitted by the MB-UDM after the MBS session is activated, to learn that the MBS session has been activated and MBS session context information has been updated; transmitting a second MBS session context get request message to the MB-UDM, the second MBS session context get request message including the MBS session identity; and receiving a second MBS session context get response message returned by the MB-UDM in response to the second MBS session context get request message, the second MBS session context get response message carrying the MBS session context information, the MBS session context information including the MBS session identity, the MB-SMF identity, a multicast broadcast-user plane function (MB-UPF) identity of the MBS session, a multicast broadcast-policy control function (MB-PCF) identity, and the quality of service flow information corresponding to the MBS session.

In an exemplary embodiment, the notification message may carry a notification correlation identity, so that the SMF obtains the PDU session of the user equipment corresponding to the notification message.

In S940: Establish a quality of service flow corresponding to the MBS session in the PDU session according to the quality of service flow information corresponding to the activated MBS session.

In an exemplary embodiment, the establishing a quality of service flow corresponding to the MBS session on the PDU session according to the quality of service flow information corresponding to the activated MBS session may include: transmitting a communication N1N2 message transfer message to the AMF in the modification procedure of the PDU session, so that an AMF establishes the quality of service flow corresponding to the MBS session in the PDU session according to the quality of service flow information corresponding to the MBS session.

For a specific implementation of the method for implementing multi-cast broadcast service handover provided in this embodiment of the present disclosure, reference may be made to the content of the method for implementing multi-cast broadcast service handover in the foregoing embodiments. Details are not described herein again.

FIG. 10 schematically shows a flowchart of a method for implementing multi-cast broadcast service handover according to the present invention. A description is made by using an example in which the method shown in the embodiment of FIG. 10 is performed by a multicast broadcast unified data manager (MB-UDM). A user equipment has been handed over from a source base station to a target base station, the source base station supporting an MBS, and the target base station not supporting the MBS, and the user equipment, before handover, has established and not activated a MBS session at the source base station. As shown in FIG. 10, the method provided in this embodiment of the present disclosure includes the following steps.

S1010: Cause a session management function (SMF) to subscribe to the MB-UDM according to an MBS session identity of the MBS session in a process of establishing a protocol data unit (PDU) session at the target base station side triggered by the user equipment, single network slice selection assistance information (S-NSSAI) of the PDU session being the same as S-NSSAI of the MBS session, and a DNN of the PDU session being the same as a DNN of the MBS session.

In an exemplary embodiment, the causing an SMF to subscribe to the MB-UDM according to an MBS session identity of the MBS session may include: receiving an MBS session context subscribe request message transmitted by the SMF, the MBS session context subscribe request message including the MBS session identity, a notification correlation identity, and an MB-SMF identity of the MBS session; causing the SMF to subscribe to the MB-UDM according to the MBS session identity, the notification correlation identity, and the MB-SMF identity; and returning an MBS session context subscribe response message to the SMF in response to the MBS session context subscribe request message.

S1020: Transmit quality of service flow information corresponding to the activated MBS session to the SMF in a modification procedure of the triggered PDU session after the MBS session is activated, so that the SMF establishes a quality of service flow corresponding to the activated MBS session in the PDU session, there being one or more pieces of quality of service flow information.

In an exemplary embodiment, before the transmitting quality of service flow information corresponding to the activated MBS session to the SMF in a modification procedure of the triggered PDU session after the MBS session is activated, the method may further include: receiving a first MBS session context get request message transmitted by the SMF, the first MBS session context get request message including the MBS session identity; returning a first MBS session context get response message to the SMF in response to the first MBS session context get request message, the first MBS session context get response message not carrying any quality of service flow information corresponding to the MBS session, so that the SMF determines, according to the first MBS session context get response message, that the MBS session is not activated.

In an exemplary embodiment, the returning a first MBS session context get response message to the SMF in response to the first MBS session context get request message may include: transmitting a first data management query request message to an MB-UDR in response to the first MBS session context get request message, a key in the first data management query request message indicating the MBS session identity, and a type in the first data management query request message indicating the MBS session context information; receiving a first data management query response message returned by the MB-UDR in response to the first data management query request message, a key carried in the first data management query response message indicating the MBS session identity, a type in the first data management query response message indicating MBS session information, and data in the first data management query response message including the MB-SMF identity and an MB-PCF identity; and returning the first MBS session context get response message to the SMF.

In an exemplary embodiment, the transmitting quality of service flow information corresponding to the activated MBS session to the SMF in a modification procedure of the triggered PDU session after the MBS session is activated may include: transmitting a notification message to the SMF after the MBS session is activated and the MBS session context information has been updated; receiving a second MBS session context get request message transmitted by the SMF, the second MBS session context get request message including the MBS session identity; and returning a second MBS session context get response message to the SMF in response to the second MBS session context get request message, the second MBS session context get response message carrying the MBS session context information. The MBS session context information may include the MBS session identity, the MB-SMF identity, a multicast broadcast-user plane function (MB-UPF) identity of the MBS session, a multicast broadcast-policy control function (MB-PCF) identity, and the quality of service flow information corresponding to the MBS session.

In an exemplary embodiment, the returning a second MBS session context get response message to the SMF in response to the second MBS session context get request message may include: transmitting a second data management query request message to an MB-UDR in response to the second MBS session context get request message, a key in the second data management query request message indicating the MBS session identity, and a type in the second data management query request message indicating MBS session context information; receiving a second data management query response message returned by the MB-UDR in response to the second data management query request message, a key carried in the second data management query response message indicating the MBS session identity, a type in the second data management query response message indicating MBS session information, and data in the second data management query response message including the MB-SMF identity, the MB-UPF identity, the MB-PCF identity, and the quality of service flow information corresponding to the MBS session; and returning the second MBS session context get response message to the SMF.

In an exemplary embodiment, after activating the MBS session and determining an MB-UPF corresponding to the MB-UPF identity for the MBS session, the method may further include: receiving an MBS session context update request message from an MB-SMF, the MBS session context update request message carrying the MBS session identity, an MB-SMF identity, the MB-UPF identity, an MB-PCF identity, and the quality of service flow information corresponding to the activated MBS session; storing the MBS session identity, the MB-SMF identity, the MB-UPF identity, the MB-PCF identity, and the quality of service flow information corresponding to the activated MBS session in the MB-UDM; transmitting a data management create/update request message to an MB-UDR, the data management create/update request message carrying the MBS session identity and MBS session information, the MBS session information including the MB-SMF identity, the MB-UPF identity, the MB-PCF identity, and the quality of service flow information corresponding to the MBS session, so that the MBS session identity and the MBS session information are stored in the MB-UDR; receiving a data management create/update response message returned by the MB-UDR in response to the data management create/update request message; and returning an MBS session context update response message to the MB-SMF in response to the MBS session context update request message.

In an exemplary embodiment, before the user equipment is handed over from the source base station to the target base station, the method may further include: receiving an MBS session context registration request message from the MB-SMF corresponding to the MB-SMF identity, the MBS session context registration request message including the MBS session identity and the MB-SMF identity; registering the MB-SMF with the MB-UDM according to the MBS session identity and the MB-SMF identity; and returning an MBS session context registration response message to the MB-SMF in response to the MBS session context registration request message.

For a specific implementation of the method for implementing multi-cast broadcast service handover provided in this embodiment of the present disclosure, reference may be made to the content of the method for implementing multi-cast broadcast service handover in the foregoing embodiments. Details are not described herein again.

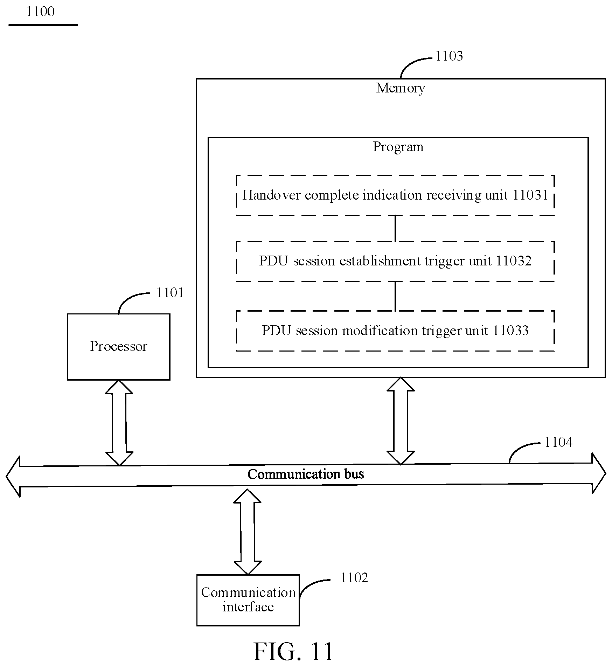

FIG. 11 schematically shows a block diagram of a user equipment according to an embodiment of the present disclosure. As shown in FIG. 11, the user equipment 1100 provided in this embodiment of the present disclosure includes: one or more processors 1101; and a storage apparatus 1103, configured to store one or more programs, the one or more programs, when executed by the one or more processors 1101, causing the one or more processors 1101 to implement the method according to any one of the foregoing embodiments. A source base station that the user equipment 1100 accesses before handover supports an MBS, the user equipment 1100, before handover, has established and not activated an MBS session at the source base station.

The program may further be configured to: receive a handover complete indication transmitted by a target base station, the handover complete indication being used for indicating that the user equipment has been handed over from the source base station to the target base station; trigger establishment of a protocol data unit (PDU) session on a target base station side in a case that it is determined that the target base station does not support the MBS, so that a session management function (SMF) subscribes to a multicast broadcast unified data manager (MB-UDM), single network slice selection assistance information (S-NSSAI) of the PDU session being the same as S-NSSAI of the MBS session, and a data network name (DNN) of the PDU session being the same as a DNN of the MBS session; and cause the SMF to acquire quality of service flow information corresponding to the activated MBS session in a modification procedure of the triggered PDU session after the MBS session is activated, to establish a quality of service flow corresponding to the activated MBS session in the PDU session, there being one or more pieces of quality of service flow information.

Referring to FIG. 11, the program may further include: a handover complete indication receiving unit 11031, a PDU session establishment trigger unit 11032, and a PDU session modification trigger unit 11033.

In this embodiment of the present disclosure, the handover complete indication receiving unit 11031 may be configured to receive a handover complete indication transmitted by a target base station, the handover complete indication being used for indicating that the user equipment has been handed over from the source base station to the target base station; the PDU session establishment trigger unit 11032 may be configured to trigger establishment of a protocol data unit (PDU) session on a target base station side in a case that it is determined that the target base station does not support the MBS, so that a session management function (SMF) subscribes to a multicast broadcast unified data manager (MB-UDM), single network slice selection assistance information (S-NSSAI) of the PDU session being the same as S-NSSAI of the MBS session, and a data network name (DNN) of the PDU session being the same as a DNN of the MBS session; and the PDU session modification trigger unit 11033 may be configured to perform a modification procedure of the triggered PDU session after the MBS session is activated, so that the SMF acquires quality of service flow information corresponding to the activated MBS session, to establish a quality of service flow corresponding to the MBS session in the PDU session.

There are one or more pieces of quality of service flow information.

In an exemplary embodiment, the PDU session establishment trigger unit 11032 may be configured to transmit a non-access stratum message to an access and mobility management function (AMF), the non-access stratum message carrying a request type, the request type indicating an existing MBS session, so that the AMF may select, according to a value of the request type, the SMF for newly establishing the PDU session.

In an exemplary embodiment, the non-access stratum message may further carry the S-NSSAI, the DNN, and an MBS session identity of the MBS session, so that the SMF establishes the PDU session according to the S-NSSAI, the DNN, and the MBS session identity, and subscribes to the MB-UDM.

In an exemplary embodiment, the non-access stratum message may further carry a PDU session identity of the PDU session and an N1 session management container, the N1 session management container carrying a PDU session establishment request.

In an exemplary embodiment, the PDU session establishment trigger unit 11032 may be configured to establish, after handed over to the target base station, a corresponding PDU session for each MBS session in a case that the user equipment, before handover, has established and not activated multiple MBS sessions at the source base station, S-NSSAI of each MBS session being the same as S-NSSAI of the corresponding PDU session, and a DNN of each MBS session being the same as a DNN of the corresponding PDU session.

In an exemplary embodiment, the user equipment 1100 may further include a registration procedure executing unit, and the unit may be configured to register, in a case that the user equipment changes to a new tracking area, the user equipment with a network after the handover complete indication transmitted by the target base station is received. The operation of triggering establishment of the PDU session on the target base station side may be performed before or after a registration procedure.

In an exemplary embodiment, the PDU session establishment trigger unit 11032 may be configured to: receive a system information block broadcast by the target base station, and determine, according to the system information block, that the target base station does not support the MBS; or obtain a target service area of the MBS, and determine, according to the target service area, that the target base station does not support the MBS.

In an exemplary embodiment, the user equipment 1100 may further include: a service request triggering unit, configured to trigger a service request procedure before establishment of the PDU session on the target base station side is triggered, so that the user equipment enters a connected state in a case that the user equipment moves from the source base station to the target base station in an idle state.

In an exemplary embodiment, the user equipment 1100 may further include a registration update executing unit, configured to perform a registration procedure with a registration type of mobility registration update before establishment of the PDU session on the target base station side is triggered, so that the user equipment enters a connected state in a case that the user equipment moves from the source base station to the target base station in an idle state and a current tracking area identity of the user equipment is not in a registered tracking area identity list.

For a specific implementation of the user equipment provided in this embodiment of the present disclosure, reference may be made to the content of the method for implementing multi-cast broadcast service handover. Details are not described herein again.

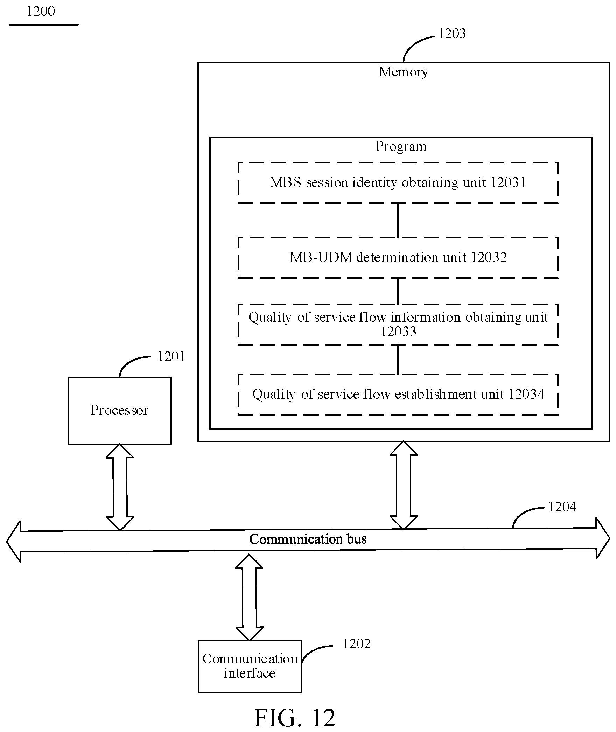

FIG. 12 schematically shows a block diagram of a session management function according to an embodiment of the present disclosure. As shown in FIG. 11, the SMF 1200 provided in this embodiment of the present disclosure may include: one or more processors 1201; and a storage apparatus 1203, configured to store one or more programs, the one or more programs, when executed by the one or more processors 1201, causing the one or more processors 1201 to implement the method according to any one of the foregoing embodiments. The user equipment has been handed over from a source base station to a target base station, the source base station supports an MBS, the target base station does not support the MBS, and the user equipment, before handover, has establish and not activated an MBS session at the source base station.

The program may further be configured to: obtain an MBS session identity of the MBS session in a process of establishing a protocol data unit (PDU) session on a target base station side triggered by the user equipment, single network slice selection assistance information (S-NSSAI) of the PDU session being the same as S-NSSAI of the MBS session, and a DNN of the PDU session being the same as a DNN of the MBS session; determine a multicast broadcast unified data manager (MB-UDM) of the MBS session according to the MBS session identity; trigger a modification procedure of the PDU session after the MBS session is activated, and acquire quality of service flow information corresponding to the activated MBS session from the MB-UDM according to an MBS session identity of the activated MBS session, there being one or more pieces of quality of service flow information; and establishing a quality of service flow corresponding to the activated MBS session on the PDU session according to the quality of service flow information corresponding to the activated MBS session.

Referring to FIG. 12, the program may further include: an MBS session identity obtaining unit 12031, an MB-UDM determination unit 12032, a quality of service flow information obtaining unit 12033, and a quality of service flow establishment unit 12034.

In this embodiment of the present disclosure, the MBS session identity obtaining unit 12031 may be configured to: obtain an MBS session identity of the MBS session in a process of establishing a protocol data unit (PDU) session on a target base station side triggered by the user equipment, single network slice selection assistance information (S-NSSAI) of the PDU session being the same as S-NSSAI of the MBS session, and a DNN of the PDU session being the same as a DNN of the MBS session; the MB-UDM determination unit 12032 may be configured to determine a multicast broadcast unified data manager (MB-UDM) of the MBS session according to the MBS session identity; the quality of service flow information obtaining unit 12033 may be configured to: trigger a modification procedure of the PDU session after the MBS session is activated, and acquire quality of service flow information corresponding to the activated MBS session from the MB-UDM according to an MBS session identity of the activated MBS session; and the quality of service flow establishment unit 12034 may be configured to establish a quality of service flow corresponding to the MBS session in the PDU session according to the quality of service flow information corresponding to the activated MBS session.

In an exemplary embodiment, the MBS session identity obtaining unit 12031 may be configured to receive a PDU session establishment session management context request message from an access and mobility management function (AMF), the PDU session establishment session management context request message including the MBS session identity.

In an exemplary embodiment, the PDU session establishment session management context request message may further include the S-NSSAI, the DNN, a request type, and a N1 session management container, the request type indicating an existing MBS session, and the N1 session management container carrying a PDU session establishment request.

In an exemplary embodiment, the MB-UDM determination unit 12032 may be configured to transmit an NF discovery request message to an NRF, the NF discovery request message including the MBS session identity and an NF type, and the NF type indicating a UDM, so that the NRF determines an MB-UDM identity of the MB-UDM according to the MBS session identity and the NF type; and receive an NF discovery response message returned by the NRF in response to the NF discovery request message, the NF discovery response message carrying the MB-UDM identity.

In an exemplary embodiment, the session management function 1200 may further include: an MBS session context subscribe request message transmitting unit, configured to: transmit an MBS session context subscribe request message to the MB-UDM according to the MB-UDM identity before the triggering a modification procedure of the PDU session after the MBS session is activated, and acquiring quality of service flow information corresponding to the activated MBS session from the MB-UDM according to an MBS session identity of the activated MBS session, the MBS session context subscribe request message including the MBS session identity, a notification correlation identity, and an MB-SMF identity of the MBS session, so that the MB-UDM causes, according to the MBS session identity, the notification correlation identity, and the MB-SMF identity, the SMF to subscribe to the MB-UDM; and an MBS session context subscribe response message receiving unit, configured to receive an MBS session context subscribe response message returned by the MB-UDM in response to the MBS session context subscribe request message.

In an exemplary embodiment, the session management function 1200 may further include: a first MBS session context get request message transmitting unit, configured to transmit a first MBS session context get request message to the MB-UDM before the triggering a modification procedure of the PDU session after the MBS session is activated, and acquiring quality of service flow information corresponding to the activated MBS session from the MB-UDM according to an MBS session identity of the activated MBS session, the first MBS session context get request message including the MBS session identity; a first MBS session context get response message receiving unit, configured to receive a first MBS session context get response message returned by the MB-UDM in response to the first MBS session context get request message; and an MBS session inactive determination unit, configured to determine, in a case that the first MBS session context get response message does not carry any quality of service flow information corresponding to the MBS session, that the MBS session is not activated.

In an exemplary embodiment, the quality of service flow information obtaining unit 12033 may be configured to: receive a notification message transmitted by the MB-UDM, to learn that the MBS session has been activated and MBS session context information has been updated; transmit a second MBS session context get request message to the MB-UDM, the second MBS session context get request message including the MBS session identity; and receive a second MBS session context get response message returned by the MB-UDM in response to the second MBS session context get request message, the second MBS session context get response message carrying the MBS session context information. The MBS session context information may include the MBS session identity, the MB-SMF identity, a multicast broadcast-user plane function (MB-UPF) identity of the MBS session, a multicast broadcast-policy control function (MB-PCF) identity, and the quality of service flow information corresponding to the MBS session.

In an exemplary embodiment, the notification message may carry a notification correlation identity, the notification correlation identity corresponding to the PDU session of the user equipment.

In an exemplary embodiment, the quality of service flow establishment unit 12034 may be configured to transmit a communication N1N2 message transfer message to the AMF in the modification procedure of the PDU session, so that an AMF establishes the quality of service flow corresponding to the MBS session in the PDU session according to the quality of service flow information corresponding to the MBS session.

In an exemplary embodiment, the session management function 1200 may further include: a UE-UDM determination unit, configured to determine a UE-UDM according to a subscription permanent identifier (SUPI) of the user equipment; before the determining an MB-UDM of the MBS session according to the MBS session identity; an MBS session management subscription data obtaining unit, configured to acquire MBS session management subscription data of the MBS session from the UE-UDM according to the SUPI; and a subscription determination unit, configured to determine, according to the MBS session management subscription data, that the S-NSSAI and the DNN have been subscribed to the UE-UDM.

For a specific implementation of the SMF provided in this embodiment of the present disclosure, reference may be made to the content of the method for implementing multi-cast broadcast service handover. Details are not described herein again.

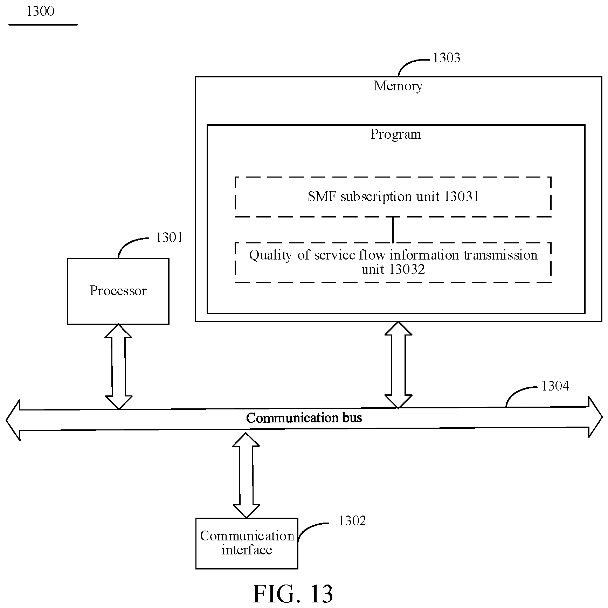

FIG. 13 schematically shows a block diagram of a multicast broadcast unified data management function according to an embodiment of the present disclosure. As shown in FIG. 13, the MB-UDM 1300 provided in this embodiment of the present disclosure may include: one or more processors 1301; and a storage apparatus 1303, configured to store one or more programs, the one or more programs, when executed by the one or more processors 1301, causing the one or more processors 1301 to implement the method according to any one of the foregoing embodiments. The user equipment has been handed over from a source base station to a target base station, the source base station supports an MBS, the target base station does not support the MBS, and the user equipment, before handover, has established and not activated an MBS session at the source base station.

The program may further be configured to: cause a session management function (SMF) to subscribe to the MB-UDM according to an MBS session identity of the MBS session in a process of establishing a protocol data unit (PDU) session at the target base station triggered by the user equipment, single network slice selection assistance information (S-NSSAI) of the PDU session being the same as S-NSSAI of the MBS session, and a DNN of the PDU session being the same as a DNN of the MBS session; and transmit quality of service flow information corresponding to the activated MBS session to the SMF in a modification procedure of the triggered PDU session after the MBS session is activated, so that the SMF establishes a quality of service flow corresponding to the activated MBS session in the PDU session.

Referring to FIG. 13, the program may further include: an SMF subscription unit 13031 and a quality of service flow information transmission unit 13032.

In this embodiment of the present disclosure, the SMF subscription unit 13031 may be configured to: cause a session management function (SMF) to subscribe to the MB-UDM according to an MBS session identity of the MBS session in a process of establishing a protocol data unit (PDU) session at the target base station triggered by the user equipment, single network slice selection assistance information (S-NSSAI) of the PDU session being the same as S-NSSAI of the MBS session, and a DNN of the PDU session being the same as a DNN of the MBS session; and the quality of service flow information transmission unit 13032 may be configured to transmit quality of service flow information corresponding to the activated MBS session to the SMF in a modification procedure of the triggered PDU session after the MBS session is activated, so that the SMF establishes a quality of service flow corresponding to the activated MBS session in the PDU session, there being one or more pieces of quality of service flow information.

In an exemplary embodiment, the SMF subscription unit 13031 may be configured to: receive an MBS session context subscribe request message transmitted by the SMF, the MBS session context subscribe request message including the MBS session identity, a notification correlation identity, and an MB-SMF identity of the MBS session; cause the SMF to subscribe to the MB-UDM according to the MBS session identity, the notification correlation identity, and the MB-SMF identity; and return an MBS session context subscribe response message to the SMF in response to the MBS session context subscribe request message.

In an exemplary embodiment, the MB-UDM 1300 may further include: a first MBS session context get request message receiving unit, configured to transmit quality of service flow information corresponding to the activated MBS session to the SMF in a modification procedure of the triggered PDU session after the MBS session is activated; and receive a first MBS session context get request message transmitted by the SMF, the first MBS session context get request message including the MBS session identity; and a first MBS session context get response message transmitting unit, configured to return a first MBS session context get response message to the SMF in response to the first MBS session context get request message, the first MBS session context get response message not carrying any quality of service flow information corresponding to the MBS session, so that the SMF determines, according to the first MBS session context get response message, that the MBS session is not activated.

In an exemplary embodiment, the first MBS session context get response message transmitting unit may be configured to: transmit a first data management query request message to an MB-UDR in response to the first MBS session context get request message, a key in the first data management query request message indicating the MBS session identity, and a type in the first data management query request message indicating MBS session context information; receive a first data management query response message returned by the MB-UDR in response to the first data management query request message, a key carried in the first data management query response message indicating the MBS session identity, a type in the first data management query response message indicating MBS session information, and data in the first data management query response including the MB-SMF identity and an MB-PCF identity; and return the first MBS session context get response message to the SMF.

In an exemplary embodiment, the quality of service flow information transmission unit 13032 may include: a notification message transmitting unit, configured to transmit a notification message to the SMF after the MBS session is activated and the MBS session context information has been updated; a second MBS session context get request message receiving unit, configured to receive a second MBS session context get request message transmitted by the SMF, the second MBS session context get request message including the MBS session identity; and a second MBS session context get response message transmitting unit, configured to return a second MBS session context get response message to the SMF in response to the second MBS session context get request message, the second MBS session context get response message carrying the MBS session context information. The MBS session context information may include the MBS session identity, the MB-SMF identity, a multicast broadcast-user plane function (MB-UPF) identity of the MBS session, a multicast broadcast-policy control function (MB-PCF) identity, and the quality of service flow information corresponding to the MBS session.

In an exemplary embodiment, the second MBS session context get response message transmitting unit may be configured to: transmit a second data management query request message to an MB-UDR in response to the second MBS session context get request message, a key in the second data management query request message indicating the MBS session identity, and a type in the second data management query request message indicating MBS session context information; receive a second data management query response message returned by the MB-UDR in response to the second data management query request message, a key carried in the second data management query response message indicating the MBS session identity, a type in the second data management query response message indicating MBS session information, and data in the second data management query response message including the MB-SMF identity, the MB-UPF identity, the MB-PCF identity, and the quality of service flow information corresponding to the MBS session; and return the second MBS session context get response message to the SMF.

In an exemplary embodiment, the MB-UDM 1300 may further include: an MBS session context update request message receiving unit, configured to receive an MBS session context update request message from an MB-SMF after activating the MBS session and determining an MB-UPF for he MBS session, the MBS session context update request message carrying the MBS session identity, an MB-SMF identity, the MB-UPF identity, an MB-PCF identity, and the quality of service flow information corresponding to the activated MBS session; a quality of service flow information storage unit, configured to store the MBS session identity, the MB-SMF identity, the MB-UPF identity, the MB-PCF identity, and the quality of service flow information corresponding to the activated MBS session in the MB-UDM; a data management create/update request message transmitting unit, configured to transmit a data management create/update request message to an MB-UDR, the data management create/update request message carrying the MBS session identity and MBS session information, the MBS session information including the MB-SMF identity, the MB-UPF identity, the MB-PCF identity, and the quality of service flow information corresponding to the MBS session, so that the MBS session identity and the MBS session information are stored in the MB-UDR; a data management create/update response message receiving unit, configured to receive a data management create/update response message returned by the MB-UDR in response to the data management create/update request message; and an MBS session context update response message transmitting unit, configured to return an MBS session context update response message to the MB-SMF in response to the MBS session context update request message.

In an exemplary embodiment, the MB-UDM 1300 may further include: an MBS session context registration request message receiving unit, configured to receive an MBS session context registration request message from the MB-SMF corresponding to the MB-SMF identity before the user equipment is handed over from the source base station to the target base station, the MBS session context registration request message including the MBS session identity and the MB-SMF identity; an MB-SMF registration unit, configured to register the MB-SMF with the MB-UDM according to the MBS session identity and the MB-SMF identity; and an MBS session context registration response message transmitting unit, configured to return an MBS session context registration response message to the MB-SMF in response to the MBS session context registration request message.

For a specific implementation of the SMF provided in this embodiment of the present disclosure, reference may be made to the content of the method for implementing multi-cast broadcast service handover. Details are not described herein again.

FIG. 11, FIG. 12, and FIG. 13 are schematic structural diagrams of the user equipment 1100, the SMF 1200, and the MB-UDM 1300 adapted to implement the embodiments of the disclosure. The structures shown in FIG. 11, FIG. 12, and FIG. 13 are merely examples, and are not to impose any limitation on a function and use scope of the embodiments of the disclosure.

Referring to FIG. 11, FIG. 12, and FIG. 13, each of the user equipment 1100, the SMF 1200, and the MB-UDM 1300 provided in the embodiments of the present disclosure may further include: a communication interface (1102, 1202, 1302) and a communication bus (1104, 1204, 1304).

The processor (1101, 1201, 1301), the communication interface (1102, 1202, 1302), and the memory (1103, 1203, 1303) are communicated with each other through the communication bus (1102, 1202, 1302).

Optionally, the communication interface (1102, 1202, 1302) may be an interface of a communication module such as an interface of a global system for mobile communications (GSM) module. The processor (1101, 1201, 1301) is configured to execute a program. The memory (1103, 1203, 1303) is configured to store the program. The program may include a computer program, the computer program including computer operating instructions.

The processor (1101, 1201, 1301) may be a central processing unit (CPU) or an application specific integrated circuit (ASIC) or may be configured as one or more integrated circuits for implementing the embodiments of the present disclosure.

The memory (1103, 1203, 1303) may include a high-speed random access memory (RAM), and may also include a non-volatile memory, for example, at least one magnetic disk storage device.

Particularly, according to an embodiment of the present disclosure, the processes described below with reference to the flowcharts may be implemented as computer software programs. For example, this embodiment of the present disclosure includes a computer program product, the computer program product includes a computer program carried on a computer-readable storage medium, and the computer program includes program code used for performing the methods shown in the flowcharts.

The computer-readable storage medium shown in the present disclosure may be a computer-readable signal medium or a computer-readable storage medium or any combination of the two.

According to another aspect, the disclosure further provides a computer-readable storage medium. The computer-readable storage medium may be included in the electronic device, or may exist alone and is not configured in the electronic device. The computer-readable storage medium carries one or more programs, the one or more programs, when executed by the electronic device, causing the electronic device to implement the method described in the following embodiments.

## Claims

1. A method for implementing multi-cast broadcast service handover in a 5G network, applied to a user equipment, a source base station that the user equipment accesses before handover supporting a multi-cast broadcast service, MBS, and the user equipment, before handover, having established and not activated an MBS session at the source base station, the method comprising:
receiving (S310) a handover complete indication transmitted by a target base station, the handover complete indication being used for indicating that the user equipment has been handed over from the source base station to the target base station;
triggering (S320) establishment of a protocol data unit, PDU, session on a target base station side in a case that it is determined that the target base station does not support the MBS, to cause a session management function, SMF, to subscribe to a multicast broadcast unified data manager, MB-UDM, single network slice selection assistance information, S-NSSAI, of the PDU session being the same as S-NSSAI of the MBS session, and a data network name, DNN, of the PDU session being the same as a DNN of the MBS session; and
performing (S330) a modification procedure of the triggered PDU session after the MBS session is activated, to cause the SMF to acquire quality of service flow information corresponding to the activated MBS session to establish a quality of service flow corresponding to the MBS session in the PDU session.

2. The method according to claim 1, further comprising:
transmitting a non-access stratum message to an access and mobility management function, AMF, the non-access stratum message carrying a request type, the request type indicating an existing MBS session, to cause the AMF to select, according to a value of the request type, the SMF for newly establishing the PDU session.

3. The method according to claim 2, wherein the non-access stratum message further carries the S-NSSAI, the DNN, and an MBS session identity of the MBS session, and the triggering establishment of a protocol data unit, PDU, session on a target base station side comprises:
establishing the PDU session through the selected SMF according to the S-NSSAI, the DNN, and the MBS session identity, to cause the SMF to subscribe to the MB-UDM.

4. The method according to any one of claim 1 or 2, wherein a non-access stratum message further carries a PDU session identity of the PDU session and an N1 session management container, the N1 session management container carrying a PDU session establishment request for establishing the PDU session.

5. The method according to claim 1, wherein a corresponding PDU session is established for each MBS session in a case that the user equipment, before handover, has established and not activated a plurality of MBS sessions at the source base station, S-NSSAI of each MBS session being the same as S-NSSAI of the corresponding PDU session, and a DNN of each MBS session being the same as a DNN of the corresponding PDU session.

6. The method according to claim 1, wherein after the receiving (S310) a handover complete indication transmitted by a target base station, the method further comprises:
registering the user equipment with a network in a case that the user equipment changes to a new tracking area,
the operation of triggering establishment of the PDU session on the target base station side being performed before or after a registration procedure.

7. The method according to claim 1, further comprising:
receiving a system information block broadcast by the target base station, and determining, according to the system information block, that the target base station does not support the MBS; or
obtaining a target service area of the MBS, and determining, according to the target service area, that the target base station does not support the MBS.

8. The method according to claim 1, wherein in a case that the user equipment moves from the source base station to the target base station in an idle state, before triggering the establishment of the PDU session on the target base station side, the method further comprises:
triggering a service request procedure, wherein the user equipment enters a connected state.

9. The method according to claim 1, wherein in a case that the user equipment moves from the source base station to the target base station in an idle state and a current tracking area identity of the user equipment is not comprised in a registered tracking area identity list, before triggering the establishment of the PDU session on the target base station side, the method further comprises:
performing a registration procedure with a registration type of mobility registration update, wherein the user equipment enters a connected state.

10. A method for implementing multi-cast broadcast service handover in a 5G network, applied to a session management function, SMF, corresponding to a user equipment, the user equipment having been handed over from a source base station to a target base station, the source base station supporting a multi-cast broadcast service, MBS, the target base station not supporting the MBS, and the user equipment, before handover, having established and not activated an MBS session at the source base station, the method comprising:
obtaining (S910) an MBS session identity of the MBS session in a process of establishing a protocol data unit, PDU, session on a target base station side triggered by the user equipment, single network slice selection assistance information, S-NSSAI, of the PDU session being the same as S-NSSAI of the MBS session, and a data network name, DNN, of the PDU session being the same as a DNN of the MBS session;
determining (S920) a multicast broadcast unified data manager, MB-UDM, of the MBS session according to the MBS session identity;
triggering (S930) a modification procedure of the PDU session after the MBS session is activated, and acquiring quality of service flow information corresponding to the activated MBS session from the MB-UDM according to the MBS session identity of the activated MBS session; and
establishing (S940) a quality of service flow corresponding to the MBS session in the PDU session according to the quality of service flow information corresponding to the activated MBS session.

11. A method for implementing multi-cast broadcast service handover in a 5G network, applied to a multicast broadcast unified data manager, MB-UDM, corresponding to a user equipment, the user equipment having been handed over from a source base station to a target base station, the source base station supporting a multi-cast broadcast service, MBS, the target base station not supporting the MBS, and the user equipment, before handover, having established and not activated an MBS session at the source base station, the method comprising:
causing (S1010) a session management function, SMF, to subscribe to the MB-UDM according to an MBS session identity of the MBS session in a process of establishing a protocol data unit, PDU, session on a target base station side triggered by the user equipment, single network slice selection assistance information, S-NSSAI, of the PDU session being the same as S-NSSAI of the MBS session, and a data network name, DNN, of the PDU session being the same as a DNN of the MBS session;
transmitting (S1020) quality of service flow information corresponding to the activated MBS session to the SMF in a modification procedure of the triggered PDU session after the MBS session is activated, to cause the SMF to establish a quality of service flow corresponding to the activated MBS session in the PDU session.

12. An electronic device, comprising:
one or more processors (1101, 1201, 1301); and
a storage apparatus (1103, 1203, 1303), configured to store one or more programs, the one or more programs, when executed by the one or more processors (1103, 1203, 1303), causing the one or more processors (1103, 1203, 1303) to implement the method according to any one of claims 1 to 9, or claim 10, or claim 11, respectively.

13. A computer-readable storage medium, storing a computer program, the computer program, when executed by a processor, implementing the method according to any one of claims 1 to 9, or claim 10, or claim 11, respectively.

14. A computer program product comprising instructions, the computer program product, when run on a computer, causing the computer to perform the method according to any one of claims 1 to 9, or claim 10, or claim 11, respectively.

## Patentansprüche

1. Verfahren zum Implementieren einer Multicastbroadcastdienstübergabe in einem 5G-Netzwerk, das auf eine Teilnehmereinrichtung angewandt wird, wobei eine Quellbasisstation, auf die die Teilnehmereinrichtung vor der Übergabe zugreift, einen Multicastbroadcastdienst, MBS, unterstützt, und die Teilnehmereinrichtung vor der Übergabe eine MBS-Sitzung an der Quellbasisstation aufgebaut und nicht aktiviert hat, wobei das Verfahren Folgendes umfasst:
Empfangen (S310) einer Übergabeabschlussanzeige, die von einer Zielbasisstation übertragen wird, wobei die Übergabeabschlussanzeige zum Anzeigen verwendet wird, dass die Teilnehmereinrichtung von der Quellbasisstation an die Zielbasisstation übergeben wurde;
Auslösen (S320) des Aufbaus einer Protokolldateneinheits(PDU)-Sitzung auf der Seite einer Zielbasisstation in einem Fall, in dem bestimmt wird, dass die Zielbasisstation den MBS nicht unterstützt, um eine Sitzungsverwaltungsfunktion, SMF, zu veranlassen, einen vereinheitlichten Multicastbroadcastdatenverwalter, MB-UDM, zu abonnieren, wobei Einzelnetzwerksliceauswahlassistenzinformationen, S-NSSAI, der PDU Sitzung dieselben sind wie die S-NSSAI der MBS-Sitzung, und wobei ein Datennetzwerkname, DNN, der PDU Sitzung derselbe ist wie ein DNN der MBS-Sitzung; und
Durchführen (S330) einer Modifizierungsprozedur an der ausgelösten PDU-Sitzung, nachdem die MBS-Sitzung aktiviert wurde, um die SMF zu veranlassen, Dienstqualitätsstrominformationen, die der aktivierten MBS-Sitzung entsprechen, zu erfassen, um einen Dienstqualitätsstrom, der der MBS-Sitzung entspricht, in der PDU-Sitzung aufzubauen.

2. Verfahren nach Anspruch 1, das ferner Folgendes umfasst:
Übertragen einer Nichtzugangsschichtnachricht zu einer Zugangs- und Mobilitätsverwaltungsfunktion, AMF, wobei die Nichtzugangsschichtnachricht eine Anforderungsart enthält, wobei die Anforderungsart eine bestehende MBS-Sitzung anzeigt, um die AMF zu veranlassen, die SMF gemäß einem Wert der Anforderungsart zum erneuten Aufbauen der PDU-Sitzung auszuwählen.

3. Verfahren nach Anspruch 2, wobei die Nichtzugangsschichtnachricht ferner die S-NSSAI, den DNN und eine MBS-Sitzungsidentität der MBS-Sitzung enthält und das Auslösen des Aufbaus einer Protokolldateneinheits(PDU)-Sitzung auf der Seite einer Zielbasisstation Folgendes umfasst:
Aufbauen der PDU-Sitzung über die ausgewählte SMF gemäß den S-NSSAI, dem DNN und der MBS-Sitzungsidentität, um die SMF zu veranlassen, den MB-UDM zu abonnieren.

4. Verfahren nach einem der Ansprüche 1 oder 2, wobei die Nichtzugangsschichtnachricht ferner eine PDU-Sitzungsidentität der PDU-Sitzung und einen N1-Sitzungsverwaltungscontainer enthält, wobei der N1-Sitzungsverwaltungscontainer eine PDU-Sitzungsaufbauanforderung zum Aufbauen der PDU-Sitzung enthält.

5. Verfahren nach Anspruch 1, wobei für jede MBS-Sitzung eine entsprechende PDU-Sitzung in einem Fall aufgebaut wird, in dem die Teilnehmereinrichtung vor der Übergabe eine Vielzahl von MBS-Sitzungen an der Quellbasisstation aufgebaut und nicht aktiviert hat, wobei S-NSSAI von jeder MBS-Sitzung dieselben sind wie die S-NSSAI der entsprechenden PDU-Sitzung und wobei ein DNN jeder MBS-Sitzung derselbe ist wie ein DNN der entsprechenden PDU-Sitzung.

6. Verfahren nach Anspruch 1, wobei das Verfahren nach dem Empfangen (S310) einer Übergabeabschlussanzeige, die von einer Zielbasisstation übertragen wird, Folgendes umfasst:
Registrieren der Teilnehmereinrichtung bei einem Netzwerk in einem Fall, in dem die Teilnehmereinrichtung zu einem neuen Verfolgungsbereich wechselt,
wobei die Operation des Auslösens des Aufbaus der PDU-Sitzung auf der Seite der Zielbasisstation vor oder nach einer Registrierungsprozedur durchgeführt wird.

7. Verfahren nach Anspruch 1, das ferner Folgendes umfasst:
Empfangen eines Systeminformationsblocks, der von der Zielbasisstation mittels Broadcasting übermittelt wird, und Bestimmen gemäß dem Systeminformationsblock, dass die Zielbasisstation den MBS nicht unterstützt; oder
Erhalten eines Zieldienstbereichs des MBS und Bestimmen gemäß dem Zieldienstbereich, dass die Zielbasisstation den MBS nicht unterstützt.

8. Verfahren nach Anspruch 1, wobei das Verfahren in einem Fall, in dem sich die Teilnehmereinrichtung in einem Ruhezustand von der Quellbasisstation zur Zielbasisstation bewegt, bevor der Aufbau der PDU-Sitzung auf der Seite der Zielbasisstation ausgelöst wird, ferner Folgendes umfasst:
Auslösen der Dienstanforderungsprozedur, wobei die Teilnehmereinrichtung in einen Verbindungszustand eintritt.

9. Verfahren nach Anspruch 1, wobei das Verfahren in einem Fall, in dem sich die Teilnehmereinrichtung in einem Ruhezustand von der Quellbasisstation zur Zielbasisstation bewegt und eine aktuelle Verfolgungsbereichsidentität der Teilnehmereinrichtung in einer registrierten Verfolgungsbereichsidentitätsliste nicht umfasst ist, bevor der Aufbau der PDU-Sitzung auf der Seite der Zielbasisstation ausgelöst wird, ferner Folgendes umfasst:
Durchführen einer Registrierungsprozedur mit einer Registrierungsart der Mobilitätsregistrierungsaktualisierung, wobei die Teilnehmereinrichtung in einen Verbindungszustand eintritt.

10. Verfahren zum Implementieren einer Multicastbroadcastdienstübergabe in einem 5G-Netzwerk, das auf eine Sitzungsverwaltungsfunktion, SMF, angewandt wird, die einer Teilnehmereinrichtung entspricht, wobei die Teilnehmereinrichtung von einer Quellbasisstation an eine Zielbasisstation übergeben wurde, wobei die Quellbasisstation einen Multicastbroadcastdienst, MBS, unterstützt, wobei die Zielbasisstation den MBS nicht unterstützt und wobei die Teilnehmereinrichtung vor der Übergabe eine MBS-Sitzung an der Quellbasisstation aufgebaut und nicht aktiviert hat, wobei das Verfahren Folgendes umfasst:
Erhalten (S910) einer MBS-Sitzungsidentität der MBS-Sitzung in einem Prozess des Aufbauens einer Protokolldateneinheits(PDU)-Sitzung auf einer Seite einer Zielbasisstation, der von der Teilnehmereinrichtung aufgebaut wird, wobei Einzelnetzwerksliceauswahlassistenzinformationen, S-NSSAI, der PDU-Sitzung dieselben sind wie S-NSSAI der MBS-Sitzung und ein Datennetzwerkname, DNN, der PDU-Sitzung derselbe ist wie ein DNN der MBS-Sitzung;
Bestimmen (S920) eines vereinheitlichten Multicastbroadcastdatenverwalters, MB-UDM, der MBS-Sitzung gemäß der MBS-Sitzungsidentität;
Auslösen (S930) einer Modifizierungsprozedur der PDU-Sitzung, nachdem die MBS-Sitzung aktiviert wurde, und Erfassen von Dienstqualitätsstrominformationen, die der aktivierten MBS-Sitzung entsprechen, aus dem MB-UDM gemäß der MBS-Sitzungsidentität der aktivierten MBS-Sitzung; und
Aufbauen (S940) eines Dienstqualitätsstroms, der der MBS-Sitzung entspricht, in der PDU-Sitzung gemäß den Dienstqualitätsstrominformationen, die der aktivierten MBS-Sitzung entsprechen.

11. Verfahren zum Implementieren einer Multicastbroadcastdienstübergabe in einem 5G-Netzwerk, das auf einen vereinheitlichten Multicastbroadcastdatenverwalter, MB-UDM, angewandt wird, der einer Teilnehmereinrichtung entspricht, wobei die Teilnehmereinrichtung von einer Quellbasisstation an eine Zielbasisstation übergeben wurde, wobei die Quellbasisstation einen Multicastbroadcastdienst, MBS, unterstützt, wobei die Zielbasisstation den MBS nicht unterstützt und wobei die Teilnehmereinrichtung vor der Übergabe eine MBS-Sitzung an der Quellbasisstation aufgebaut und nicht aktiviert hat, wobei das Verfahren Folgendes umfasst:
Veranlassen (S1010) einer Sitzungsverwaltungsfunktion, SMF, gemäß einer MBS-Sitzungsidentität der MBS-Sitzung in einem Prozess des Aufbauens einer Protokolldateneinheits(PDU)-Sitzung auf einer Seite einer Zielbasisstation, die von der Teilnehmereinrichtung aufgebaut wird, den MB-UDM zu abonnieren, wobei Einzelnetzwerksliceauswahlassistenzinformationen, S-NSSAI, der PDU-Sitzung dieselben sind wie S-NSSAI der MBS-Sitzung und ein Datennetzwerkname, DNN, der PDU-Sitzung derselbe ist wie ein DNN der MBS-Sitzung;
Übertragen (S1020) von Dienstqualitätsstrominformationen, die der aktivierten MBS-Sitzung entsprechen, in einer Modifizierungsprozedur der ausgelösten PDU-Sitzung zur SMF, nachdem die MBS-Sitzung aktiviert wurde, um die SMF zu veranlassen, einen Dienstqualitätsstrom, der der aktivierten MBS-Sitzung entspricht, in der PDU-Sitzung aufzubauen.

12. Elektronische Vorrichtung, die Folgendes umfasst:
einen oder mehrere Prozessoren (1101, 1201, 1301); und
eine Speichereinrichtung (1103, 1203, 1303), die dazu ausgelegt ist, ein oder mehrere Programme zu speichern, wobei das eine oder die mehreren Programme, wenn sie von dem einen oder den mehreren Prozessoren (1103, 1203, 1303) ausgeführt werden, den einen oder die mehreren Prozessoren (1103, 1203, 1303) veranlassen, das Verfahren nach einem der Ansprüche 1 bis 9 bzw. Anspruch 10 oder Anspruch 11 zu implementieren.

13. Computerlesbares Speichermedium, auf dem ein Computerprogramm gespeichert ist, wobei das Computerprogramm, wenn es von einem Prozessor ausgeführt wird, das Verfahren nach einem der Ansprüche 1 bis 9 bzw. Anspruch 10 oder Anspruch 11 implementiert.

14. Computerprogrammprodukt, das Anweisungen umfasst, wobei das Computerprogrammprodukt, wenn es auf einem Computer läuft, den Computer veranlasst, das Verfahren nach einem der Ansprüche 1 bis 9 bzw. Anspruch 10 oder Anspruch 11 durchzuführen.

## Revendications

1. Procédé pour mettre en œuvre un transfert intercellulaire de service de diffusion et de multidiffusion dans un réseau 5G, appliqué à un équipement utilisateur, une station de base source à laquelle l'équipement utilisateur accède avant un transfert intercellulaire prenant en charge un service de diffusion et de multidiffusion, MBS, et l'équipement utilisateur ayant établi sans l'activer une session MBS au niveau de la station de base source avant le transfert intercellulaire, le procédé comprenant les étapes suivantes :
recevoir (S310) une indication de transfert intercellulaire terminé transmise par une station de base cible, l'indication de transfert intercellulaire terminé étant utilisée pour indiquer que l'équipement utilisateur a été soumis à un transfert intercellulaire de la station de base source à la station de base cible ;
déclencher (S320) l'établissement d'une session d'unité de données de protocole, PDU, côté station de base cible dans le cas où il est déterminé que la station de base cible ne prend pas en charge le MBS, afin d'amener une fonction de gestion de session, SMF, à s'abonner à un gestionnaire de données unifié de diffusion et de multidiffusion, MB-UDM, les informations d'aide à la sélection de tranche de réseau unique, S-NSSAI, de la session PDU étant les mêmes que les S-NSSAI de la session MBS, et un nom de réseau de données, DNN, de la session PDU étant le même qu'un DNN de la session MBS ; et
réaliser (S330) une procédure de modification de la session PDU déclenchée après l'activation de la session MBS pour amener la SMF à acquérir des informations de flux de qualité de service correspondant à la session MBS activée afin d'établir un flux de qualité de service correspondant à la session MBS dans la session PDU.

2. Procédé selon la revendication 1, comprenant en outre l'étape suivante :
transmettre un message de strate non-accès à une fonction de gestion d'accès et de mobilité, AMF, le message de strate non-accès transportant un type de demande, le type de demande indiquant une session MBS existante, pour amener l'AMF à sélectionner la SMF selon une valeur du type de demande afin d'établir récemment la session PDU.

3. Procédé selon la revendication 2, dans lequel le message de strate non-accès transporte en outre les S-NSSAI, le DNN et une identité de session MBS de la session MBS, et le déclenchement de l'établissement d'une session d'unité de données de protocole, PDU, côté station de base cible comprend ce qui suit :
établir la session PDU via la SMF sélectionnée selon les S-NSSAI, le DNN et l'identité de session MBS, pour amener la SMF à s'abonner au MB-UDM.

4. Procédé selon l'une quelconque des revendications 1 ou 2, dans lequel un message de strate non-accès transporte en outre une identité de session PDU de la session PDU et un conteneur de gestion de session N1, le conteneur de gestion de session N1 transportant une demande d'établissement de session PDU pour établir la session PDU.

5. Procédé selon la revendication 1, dans lequel une session PDU correspondante est établie pour chaque session MBS dans le cas où l'équipement utilisateur a établi sans les activer une pluralité de sessions MBS au niveau de la station de base source avant le transfert intercellulaire, les S-NSSAI de chaque session MBS étant les mêmes que les S-NSSAI de la session PDU correspondante, et un DNN de chaque session MBS étant le même qu'un DNN de la session PDU correspondante.

6. Procédé selon la revendication 1, dans lequel après la réception (S310) d'une indication de transfert intercellulaire terminé transmise par une station de base cible, le procédé comprend en outre l'étape suivante :
enregistrer l'équipement utilisateur auprès d'un réseau dans le cas où l'équipement utilisateur passe à une nouvelle zone de suivi,
l'opération de déclenchement de l'établissement de la session PDU côté station de base cible étant réalisée avant ou après une procédure d'enregistrement.

7. Procédé selon la revendication 1, comprenant en outre les étapes suivantes :
recevoir un bloc d'informations système diffusé par la station de base cible, et selon le bloc d'informations système, déterminer que la station de base cible ne prend pas en charge le MBS ; ou
obtenir une zone de service cible du MBS, et selon la zone de service cible, déterminer que la station de base cible ne prend pas en charge le MBS.

8. Procédé selon la revendication 1, dans lequel, dans le cas où l'équipement utilisateur passe de la station de base source à la station de base cible dans un état de veille, avant de déclencher l'établissement de la session PDU côté station de base cible, le procédé comprend en outre l'étape suivante :
déclencher une procédure de demande de service, dans lequel l'équipement utilisateur entre dans un état connecté.

9. Procédé selon la revendication 1, dans lequel, dans le cas où l'équipement utilisateur passe de la station de base source à la station de base cible dans un état de veille et où une identité de zone de suivi actuelle de l'équipement utilisateur n'est pas comprise dans une liste d'identités de zone de suivi enregistrées, avant de déclencher l'établissement de la session PDU côté station de base cible, le procédé comprend en outre l'étape suivante :
réaliser une procédure d'enregistrement avec un type d'enregistrement d'une mise à jour d'enregistrement de mobilité, dans lequel l'équipement utilisateur entre dans un état connecté.

10. Procédé pour mettre en œuvre un transfert intercellulaire de service de diffusion et de multidiffusion dans un réseau 5G, appliqué à une fonction de gestion de session, SMF, correspondant à un équipement utilisateur, l'équipement utilisateur ayant subi un transfert intercellulaire d'une station de base source à une station de base cible, la station de base source prenant en charge un service de diffusion et de multidiffusion, MBS, la station de base cible ne prenant pas en charge le MBS, et l'équipement utilisateur ayant établi sans l'activer une session MBS au niveau de la station de base source avant le transfert intercellulaire, le procédé comprenant les étapes suivantes :
obtenir (S910) une identité de session MBS de la session MBS dans un processus d'établissement d'une session d'unité de données de protocole, PDU, côté station de base cible, déclenché par l'équipement utilisateur, les informations d'aide à la sélection de tranche de réseau unique, S-NSSAI, de la session PDU étant les mêmes que les S-NSSAI de la session MBS, et un nom de réseau de données, DNN, de la session PDU étant le même qu'un DNN de la session MBS ;
déterminer (S920) un gestionnaire de données unifié de diffusion et de multidiffusion, MB-UDM, de la session MBS selon l'identité de session MBS ;
déclencher (S930) une procédure de modification de la session PDU après l'activation de la session MBS, et acquérir des informations de flux de qualité de service correspondant à la session MBS activée à partir du MB-UDM selon l'identité de session MBS de la session MBS activée ; et
établir (S940) un flux de qualité de service correspondant à la session MBS dans la session PDU selon les informations de flux de qualité de service correspondant à la session MBS activée.

11. Procédé pour mettre en œuvre un transfert intercellulaire de service de diffusion et de multidiffusion dans un réseau 5G, appliqué à un gestionnaire de données unifié de diffusion et de multidiffusion, MB-UDM, correspondant à un équipement utilisateur, l'équipement utilisateur ayant subi un transfert intercellulaire d'une station de base source à une station de base cible, la station de base source prenant en charge un service de diffusion et de multidiffusion, MBS, la station de base cible ne prenant pas en charge le MBS, et l'équipement utilisateur ayant établi sans l'activer une session MBS au niveau de la station de base source avant le transfert intercellulaire, le procédé comprenant les étapes suivantes :
amener (S1010) une fonction de gestion de session, SMF, à s'abonner au MB-UDM selon une identité de session MBS de la session MBS dans un processus d'établissement d'une session d'unité de données de protocole, PDU, côté station de base cible, déclenché par l'équipement utilisateur, les informations d'aide à la sélection de tranche de réseau unique, S-NSSAI, de la session PDU étant les mêmes que les S-NSSAI de la session MBS, et un nom de réseau de données, DNN, de la session PDU étant le même qu'un DNN de la session MBS ;
transmettre (S1020) des informations de flux de qualité de service correspondant à la session MBS activée à la SMF dans une procédure de modification de la session PDU déclenchée après l'activation de la session MBS pour amener la SMF à établir un flux de qualité de service correspondant à la session MBS activée dans la session PDU.

12. Dispositif électronique, comprenant :
un ou plusieurs processeurs (1101, 1201, 1301) ; et
un appareil de stockage (1103, 1203, 1303) configuré pour stocker un ou plusieurs programmes, les un ou plusieurs programmes, lorsqu'ils sont exécutés par les un ou plusieurs processeurs (1103, 1203, 1303), amenant les un ou plusieurs processeurs (1103, 1203, 1303) à mettre en œuvre le procédé selon l'une quelconque des revendications 1 à 9, ou la revendication 10, ou la revendication 11, respectivement.

13. Support de stockage lisible par ordinateur stockant un programme informatique, le programme informatique, lorsqu'il est exécuté par un processeur, mettant en œuvre le procédé selon l'une quelconque des revendications 1 à 9, ou la revendication 10, ou la revendication 11, respectivement.

14. Produit de programme informatique comprenant des instructions, le produit de programme informatique, lorsqu'il est exécuté sur un ordinateur, amenant l'ordinateur à réaliser le procédé selon l'une quelconque des revendications 1 à 9, ou la revendication 10, ou la revendication 11, respectivement.
